(19) Europäisches Patentamt
European Patent Office
Office européen des brevets

(11) EP 1 268 650 B1

(12) FASCICULE DE BREVET EUROPEEN

(45) Date de publication et mention de la délivrance du brevet:
**15.10.2003 Bulletin 2003/42**

(21) Numéro de dépôt: **01902347.2**

(22) Date de dépôt: **22.01.2001**

(51) Int Cl.[7]: **C08K 5/54**, C08K 5/29, C08L 21/00

(86) Numéro de dépôt international:
**PCT/EP01/00662**

(87) Numéro de publication internationale:
**WO 01/055253 (02.08.2001 Gazette 2001/31)**

(54) **COMPOSITION DE CAOUTCHOUC POUR PNEUMATIQUE COMPORTANT UNE CHARGE INORGANIQUE RENFOR ANTE ET UN SYSTEME DE COUPLAGE (CHARGE INORGANIQUE/ELASTOMERE)**

KAUTSCHUKZUSAMMENSETZUNG FÜR REIFEN, DIE EINEN ANORGANISCHEN VERSTÄRKENDEN FÜLLSTOFF UND EIN KUPPLUNGSSYSTEM (ANORGANISCHER FÜLLSTOFF/ELASTOMER) ENTHÄLT

RUBBER COMPOSITION FOR TYRES COMPRISING A REINFORCING INORGANIC FILLER AND AN (INORGANIC FILLER/ELASTOMER) COUPLING SYSTEM

(84) Etats contractants désignés:
**AT BE CH CY DE DK ES FI FR GB GR IE IT LI LU MC NL PT SE TR**

(30) Priorité: **24.01.2000 FR 0001012**

(43) Date de publication de la demande:
**02.01.2003 Bulletin 2003/01**

(73) Titulaires:
- **Sociéte de Technologie Michelin
63000 Clermont-Ferrand Cedex 09 (FR)**
- **MICHELIN RECHERCHE ET TECHNIQUE S.A.
CH-1763 Granges-Paccot (CH)**

(72) Inventeur: **PENOT, Christophe
F-63400 Chamalières (FR)**

(74) Mandataire: **Ribière, Joel
M.F.P. Michelin,
SGD/LG/PI - F35 - Ladoux
63040 Clermont-Ferrand Cedex 9 (FR)**

(56) Documents cités:
**FR-A- 2 765 881**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 268 650 B1

Printed by Jouve, 75001 PARIS (FR)

## Description

La présente invention se rapporte aux compositions de caoutchoucs diéniques renforcées d'une charge blanche ou inorganique, destinées particulièrement à la fabrication de pneumatiques ou de produits semi-finis pour pneumatiques, notamment aux bandes de roulement de ces pneumatiques.

Depuis que les économies de carburant et la nécessité de protéger l'environnement sont devenues une priorité, il est souhaitable de produire des élastomères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution de pneumatiques tels que par exemple des sous-couches, des gommes de calandrage ou de flancs ou des bandes de roulement et obtenir des pneumatiques aux propriétés améliorées, possédant notamment une résistance au roulement réduite.

Pour atteindre un tel objectif de nombreuses solutions ont été proposées, tout d'abord essentiellement concentrées sur l'utilisation d'élastomères modifiés au moyen d'agents tels que des agents de couplage, d'étoilage ou de fonctionnalisation, avec du noir de carbone comme charge renforçante dans le but d'obtenir une bonne interaction entre l'élastomère modifié et le noir de carbone. On sait en effet, d'une manière générale, que pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges blanches ou inorganiques. Pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance des compositions caoutchouteuses et donc à rendre leur mise en oeuvre ("processabilité") à l'état cru plus difficile qu'en présence de noir de carbone.

L'intérêt pour les compositions de caoutchouc renforcées de charge inorganique a été cependant fortement relancé avec la publication de la demande de brevet européen EP-A-0 501 227 qui divulgue une composition de caoutchouc diénique vulcanisable au soufre, renforcée d'une silice précipitée particulière du type hautement dispersible, qui permet de fabriquer un pneumatique ou une bande de roulement ayant une résistance au roulement nettement améliorée, sans affecter les autres propriétés en particulier celles d'adhérence, d'endurance et de résistance à l'usure. Les demandes EP-A-0 810 258 et W099/28376 divulguent quant à elles des compositions de caoutchouc diénique renforcées d'autres charges inorganiques particulières, en l'occurrence des alumines ou des (oxyde-)hydroxydes d'aluminium spécifiques, à dispersibilité élevée, qui permettent elles aussi l'obtention de pneumatiques ou de bandes de roulement ayant un tel excellent compromis de propriétés contradictoires.

L'utilisation de ces charges inorganiques spécifiques, siliceuses ou alumineuses, hautement renforçantes, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la connexion entre la surface des particules de charge inorganique et l'élastomère, tout en facilitant la dispersion de cette charge inorganique au sein de la matrice élastomérique.

Par agent de "couplage" (charge inorganique/élastomère), on entend de manière connue un agent apte à établir une connexion suffisante, de nature chimique et/ou physique, entre la charge inorganique et l'élastomère ; un tel agent de couplage, au moins bifonctionnel, a par exemple comme formule générale simplifiée " Y-T-X ", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère, par exemple par l'intermédiaire d'un atome de soufre;
- T représente un groupe hydrocarboné permettant de relier Y et X.

Les agents de couplage ne doivent en particulier pas être confondus avec de simples agents de recouvrement

de charge inorganique qui de manière connue peuvent comporter la fonction Y active vis-à-vis de la charge inorganique mais sont dépourvus de la fonction X active vis-à-vis de l'élastomère.

Des agents de couplage silice/élastomère, notamment, ont été décrits dans un grand nombre de documents, les plus connus étant des alkoxysilanes bifonctionnels.

Ainsi il a été proposé dans la demande de brevet FR-A-2 094 859 d'utiliser un mercaptosilane pour la fabrication de bandes de roulement de pneumatiques. Il fut rapidement mis en évidence et il est aujourd'hui bien connu que les mercaptosilanes, et en particulier le γ-mercaptopropyltriméthoxysilane ou le γ-mercaptopropyltriéthoxysilane, sont susceptibles de procurer d'excellentes propriétés de couplage silice/élastomère, mais que l'utilisation industrielle de ces agents de couplage n'est pas possible en raison de la forte réactivité des fonctions -SH conduisant très rapidement au cours de la préparation de la composition de caoutchouc dans un mélangeur interne à des vulcanisations prématurées, appelées encore "grillage" ("scorching"), à des plasticités Mooney très élevées, en fin de compte à des compositions de caoutchouc quasiment impossibles à travailler et à mettre en oeuvre industriellement. Pour illustrer cette impossibilité d'utiliser industriellement de tels agents de couplage porteurs de fonctions -SH, et les compositions de caoutchouc les contenant, on peut citer par exemple les documents FR-A-2 206 330, US-A-4 002 594.

Pour remédier à cet inconvénient, il a été proposé de remplacer ces mercaptosilanes par des alkoxysilanes polysulfurés, notamment des polysulfures de bis-alkoxyl($C_1$-$C_4$)silylpropyle tels que décrits dans de nombreux brevets ou demandes de brevet (voir par exemple FR-A-2 206 330, US-A-3 842 111, US-A-3 873 489, US-A-3 978 103, US-A-3 997 581). Ces alkoxysilanes polysulfurés sont généralement considérés aujourd'hui comme les produits apportant, pour des vulcanisats chargés à la silice, le meilleur compromis en terme de sécurité au grillage, de facilité de mise en oeuvre et de pouvoir renforçant. Parmi ces polysulfures, doivent être cités notamment le disulfure de bis 3-triéthoxysilylpropyle (en abrégé TESPD), plus particulièrement le tétrasulfure de bis 3-triéthoxysilylpropyle (en abrégé TESPT) qui est connu à ce jour comme l'agent de couplage (charge inorganique/élastomère diénique) le plus efficace (et donc le plus utilisé) dans les compositions de caoutchouc pour pneumatiques, notamment celles destinées à constituer des bandes de roulement ; il est commercialisé par exemple sous la dénomination "Si69" par la société Degussa.

Or, la Demanderesse a découvert lors de ses recherches que l'utilisation d'une aldimine en faible quantité, en combinaison avec un dérivé guanidique, a pour effet inattendu d'activer la fonction de couplage des alkoxysilanes polysulfurés, c'est-à-dire d'augmenter encore l'efficacité de ces derniers.

Grâce à cette activation, on peut désormais envisager de réduire de manière sensible la quantité d'alkoxysilanes polysulfurés habituellement utilisée. Ceci est particulièrement avantageux car ces alkoxysilanes sont d'une part très coûteux et doivent d'autre part être utilisés en une quantité importante, de l'ordre de deux à trois fois plus que la quantité de γ-mercaptopropyltrialkoxysilanes nécessaire pour obtenir des niveaux de propriétés de couplage équivalentes ; ces inconvénients bien connus ont été décrits par exemple dans les brevets US-A-5 652 310, US-A-5 684 171, US-A-5 684 172. Ainsi, le coût global des compositions de caoutchouc peut être notablement abaissé, ainsi que celui des pneumatiques qui les comportent.

En conséquence, un premier objet de l'invention concerne une composition de caoutchouc utilisable pour la fabrication de pneumatiques, à base d'au moins (i) un élastomère diénique, (ii) une charge inorganique à titre de charge renforçante, (iii) un alkoxysilane polysulfuré à titre d'agent de couplage (charge inorganique/élastomère diénique) auquel sont associés (iv) une aldimine et (v) un dérivé guanidique.

L'invention a également pour objet l'utilisation d'une composition de caoutchouc conforme à l'invention pour la fabrication d'articles en caoutchouc, en particulier de pneumatiques ou de produits semi-finis destinés à ces pneumatiques, ces produits semi-finis étant choisis en particulier dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

L'invention concerne plus particulièrement l'utilisation d'une telle composition de caoutchouc, en raison de ses bonnes propriétés hystérétiques, pour la fabrication des flancs ou des bandes de roulement.

L'invention concerne également un procédé de préparation d'une composition conforme à l'invention, ce procédé étant caractérisé en ce qu'on incorpore à (i) au moins un élastomère diénique, au moins: (ii) une charge inorganique à titre de charge renforçante ; (iii) un alkoxysilane polysulfuré ; (iv) une aldimine et (v) un dérivé guanidique, et en ce qu'on malaxe thermomécaniquement le tout, en une ou plusieurs étapes, jusqu'à atteindre une température maximale comprise entre 120°C et 190°C.

La composition conforme à l'invention est particulièrement adaptée à la confection de bandes de roulement de pneumatiques destinés à équiper des véhicules de tourisme, véhicules 4x4, camionnette, véhicules deux roues et Poids-lourds, avions, engins de génie civil, agraire ou de manutention, ces bandes de roulement pouvant être utilisées lors de la fabrication de pneumatiques neufs ou pour le rechapage de pneumatiques usagés.

L'invention a également pour objet ces pneumatiques et ces produits semi-finis en caoutchouc eux-mêmes lorsqu'ils comportent une composition de caoutchouc conforme à l'invention. L'invention concerne en particulier les bandes de roulement de pneumatiques ; grâce aux compositions de l'invention, ces bandes de roulement présentent

à la fois une faible résistance au roulement et une résistance élevée à l'usure.

L'invention concerne également, en soi, un système de couplage (charge inorganique/élastomère diénique) pour composition de caoutchouc diénique renforcée d'une charge inorganique, utilisable pour la fabrication de pneumatiques, ledit système étant constitué par l'association d'un alkoxysilane polysulfuré, d'une aldimine et d'un dérivé guanidique.

L'invention a également pour objet l'utilisation d'un tel système de couplage (charge inorganique/élastomère diénique) dans une composition de caoutchouc pour pneumatique.

L'invention a d'autre part pour objet l'utilisation en combinaison d'une aldimine et d'un dérivé guanidique, dans une composition de caoutchouc renforcée d'une charge inorganique, pour activer la fonction de couplage (charge inorganique/élastomère diénique) des alkoxysilanes polysulfurés.

L'invention a enfin pour objet un procédé pour coupler une charge inorganique et un élastomère diénique, dans une composition de caoutchouc, ce procédé étant caractérisé en ce qu'on incorpore à (i) au moins un élastomère diénique, au moins: (ii) une charge inorganique à titre de charge renforçante; (iii) un alkoxysilane polysulfuré; (iv) une aldimine et (v) un dérivé guanidique, et en ce qu'on malaxe thermomécaniquement le tout, en une ou plusieurs étapes, jusqu'à atteindre une température maximale comprise entre 120°C et 190°C.

L'invention ainsi que ses avantages seront aisément compris à la lumière de la description et des exemples de réalisation qui suivent, ainsi que des figures relatives à ces exemples qui représentent des courbes de variation de module (en MPa) en fonction de l'allongement (en %) pour différentes compositions de caoutchouc diénique, conformes ou non à l'invention.

## I. MESURES ET TESTS UTILISES

Les compositions de caoutchouc sont caractérisées avant et après cuisson, comme suit.

### I-1. Plasticité Mooney

On utilise un consistomètre oscillant tel que décrit dans la norme AFNOR-NFT-43005 (Novembre 1980). La mesure de plasticité Mooney se fait selon le principe suivant : la composition à l'état cru (i.e. avant cuisson) est moulée dans une enceinte cylindrique chauffée à 100°C. Après une minute de préchauffage, le rotor tourne au sein de l'éprouvette à 2 tours / minute et on mesure le couple utile pour entretenir ce mouvement après 4 minutes de rotation. La plasticité Mooney (ML1+4) est exprimée en "unité Mooney" (UM, avec 1 UM = 0,83 Newton.mètre).

### I-2. Temps de grillage

Les mesures sont effectuées à 130°C, conformément à la norme AFNOR-NFT-43004 (Novembre 1980). L'évolution de l'indice consistométrique en fonction du temps permet de déterminer le temps de grillage des compositions de caoutchouc, apprécié conformément à la norme précitée par le paramètre T5, exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Essais de traction

Ces essais de traction permettent de déterminer les contraintes d'élasticité et les propriétés à la rupture. Sauf indication différente, ils sont effectués conformément à la norme AFNOR-NFT-46002 de septembre 1988. On mesure en seconde élongation (i.e. après un cycle d'accommodation) les modules sécants nominaux (en MPa) à 10% d'allongement (notés M10), 100% d'allongement (M100) et 300% d'allongement (M300). On mesure également les contraintes à la rupture (en MPa) et les allongements à la rupture (en %). Toutes ces mesures de traction sont effectuées dans les conditions normales de température et d'hygrométrie selon la norme AFNOR-NFT-40101 (décembre 1979).

Un traitement des enregistrements de traction permet également de tracer la courbe de module en fonction de l'allongement (voir figures annexées), le module utilisé ici étant le module sécant vrai mesuré en première élongation, et calculé en se ramenant à la section réelle de l'éprouvette, et non à la section initiale comme précédemment pour les modules nominaux.

### I-4. Pertes hystérétiques

Les pertes hystérétiques (notées PH) sont mesurées par rebond à 60°C au 6ème choc, et exprimées en % selon la relation suivante:

$$PH(\%) = 100[(W_0-W_1)/W_0],$$

avec $W_0$ : énergie fournie ; $W_1$ : énergie restituée.

## II. CONDITIONS DE REALISATION DE L'INVENTION

Les compositions de caoutchouc selon l'invention sont à base des constituants suivants: (i) un (au moins un) élastomère diénique (composant A), (ii) une (au moins une) charge inorganique à titre de charge renforçante (composant B), (iii) un (au moins un) alkoxysilane polysulfuré (composant C - en abrégé ASPS) en tant qu'agent de couplage (charge inorganique/élastomère diénique) auquel sont associés, pour activer le couplage, (iv) une (au moins une) aldimine (composant D) et (v) un (au moins un) dérivé guanidique (composant E).

Bien entendu, par l'expression composition "à base de", il faut entendre une composition comportant le mélange et/ou le produit de réaction *in situ* des différents constituants utilisés, certains de ces constituants étant susceptibles de, ou destinés à réagir entre eux, au moins en partie, lors des différentes phases de fabrication de la composition, notamment au cours de sa vulcanisation.

Le système de couplage conforme à l'invention est quant à lui constitué d'un agent de couplage ASPS, de préférence majoritaire (i.e., à plus de 50% en poids) et d'un activateur de couplage formé par l'association d'une aldimine et d'un dérivé guanidique.

### II-1. Elastomère diénique (composant A)

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles).

C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%).

Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans les compositions conformes à l'invention:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbomène, le dicyclopentadiène;

(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention, en particulier lorsque la composition de caoutchouc est destinée à une bande de roulement de pneumatique, est en premier lieu mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di (alkyle en $C_1$-$C_5$)-1,3-butadiènes tels que par exemple le 2,3-diméthyl-1,3-butadiène, le 2,3-diéthyl-1,3-buiadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, paraméthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition conforme à l'invention est choisi dans le groupe des élastomères diéniques fortement insaturés constitué par les polybutadiènes (BR), les polyisoprènes (IR), le caoutchouc naturel (NR), les copolymères de butadiène, les copolymères d'isoprène et les mélanges de ces élastomères.

De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition conforme à l'invention est particulièrement destinée à une bande de roulement pour pneumatique, qu'il s'agisse d'un pneumatique neuf ou usagé (rechapage).

Dans le cas d'un pneumatique pour véhicule tourisme, le composant A est par exemple un SBR ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence préparé en solution, est éventuellement utilisé en mélange avec un polybutadiène (BR) possédant de préférence plus de 90% de liaisons cis-1,4.

Dans le cas d'un pneumatique pour véhicule utilitaire, notamment pour véhicule "Poids-lourd" - i.e., métro, bus, engins de transport routier (camions, tracteurs, remorques), véhicules hors-la-route -, le composant A est par exemple choisi dans le groupe constitué par le caoutchouc naturel, les polyisoprènes de synthèse, les copolymères d'isoprène (isoprène-butadiène, isoprène-styrène, butadiène-styrène-isoprène) et les mélanges de ces élastomères. Dans un tel cas, le composant A peut être aussi constitué, en tout ou partie, d'un autre élastomère fortement insaturé tel que, par exemple, un élastomère SBR.

Selon un autre mode de réalisation avantageux de l'invention, notamment lorsqu'elle est destinée à un flanc de pneumatique, la composition conforme à l'invention peut contenir au moins un élastomère diénique essentiellement saturé, en particulier au moins un copolymère EPDM, que ce copolymère soit par exemple utilisé ou non en mélange avec un ou plusieurs des élastomères diéniques fortement insaturés cités précédemment.

Bien entendu, les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge renforçante (composant B)

La charge blanche ou inorganique utilisée à titre de charge renforçante peut constituer la totalité ou une partie seulement de la charge renforçante totale, dans ce dernier cas associée par exemple à du noir de carbone.

De préférence, dans les compositions de caoutchouc conformes à l'invention, la charge inorganique renforçante constitue la majorité, c'est-à-dire plus de 50% en poids de la charge renforçante totale, plus préférentiellement plus de 80% en poids de cette charge renforçante totale.

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Préférentiellement, la charge inorganique renforçante est une charge minérale du type siliceuse ou alumineuse, ou un mélange de ces deux types de charges.

La silice ($SiO_2$) utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer les silices BV3380 et Ultrasil 7000 de la société Degussa, les silices Zeosil 1165 MP et 1115 MP de la société Rhodia, la silice Hi-Sil 2000 de la société PPG, les silices Zeopol 8715 ou 8745 de la Société Huber, des silices précipitées traitées telles que par exemple les silices "dopées" à l'aluminium décrites dans la demande EP-A-0 735 088.

L'alumine ($Al_2O_3$) renforçante utilisée préférentiellement est une alumine hautement dispersible ayant une surface BET allant de 30 à 400 $m^2/g$, plus préférentiellement entre 60 et 250 $m^2/g$, une taille moyenne de particules au plus égale à 500 nm, plus préférentiellement au plus égale à 200 nm, telle que décrite dans la demande EP-A-0 810 258 précitée. Comme exemples non limitatifs de telles alumines renforçantes, on peut citer notamment les alumines A125 ou CR125 (société Baïkowski), APA-100RDX (société Condea), Aluminoxid C (société Degussa) ou AKP-G015 (Sumitomo Chemicals). On peut aussi mettre en oeuvre l'invention en utilisant comme charge inorganique renforçante les (oxyde-)hydroxydes d'aluminium spécifiques tels que décrits dans la demande WO99/28376.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les compositions de caoutchouc de l'invention sont utilisées comme bandes de roulement de pneumatiques, la charge inorganique renforçante utilisée, en particulier s'il s'agit de silice, a de préférence une surface BET comprise entre 60 et 250 $m^2/g$, plus préférentiellement comprise entre 80 et 230 $m^2/g$.

La charge inorganique renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneumatiques et particulièrement dans les bandes de roulement de ces pneumatique. A titre d'exemples non limitatifs de tels noirs, on peut citer les noirs N115, N134, N234, N339, N347, N375. La quantité de noir de carbone présente dans la charge renforçante totale peut varier dans de larges limites, cette quantité étant préférentiellement inférieure à la quantité de charge inorganique renforçante présente dans la composition de caoutchouc.

De manière préférentielle, le taux de charge renforçante totale (charge inorganique renforçante plus noir de carbone le cas échéant) est compris dans un domaine allant de 20 à 300 pce, plus préférentiellement de 30 à 150 pce, encore plus préférentiellement de 50 à 130 pce (parties en poids pour cent d'élastomère), l'optimum étant différent selon la nature de la charge inorganique renforçante utilisée et selon les applications visées : le niveau de renforcement attendu sur un pneumatique vélo, par exemple, est de manière connue nettement inférieur à celui exigé sur un pneumatique apte à rouler à grande vitesse de manière soutenue, par exemple un pneu moto, un pneu pour véhicule de tourisme ou pour véhicule utilitaire tel que Poids-lourd.

Pour les bandes de roulement de pneumatiques aptes à rouler à grande vitesse, la quantité de charge inorganique renforçante, en particulier s'il s'agit de silice, est de préférence comprise dans un domaine de 50 à 100 pce.

Dans le présent exposé, la surface spécifique BET est déterminée de manière connue, selon la méthode de Brunauer-Emmet-Teller décrite dans "The Journal of the American Chemical Society", vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.

II-3. Agent de couplage (composant C)

L'agent de couplage utilisé dans les compositions de caoutchouc conformes à l'invention est un ASPS, porteur de manière connue de deux types de fonctions notées ici "Y" et "X", greffable d'une part sur la charge inorganique au moyen de la fonction "Y" (fonction alkoxysilyle) et d'autre part sur l'élastomère au moyen de la fonction "X" (fonction soufrée).

Les ASPS sont largement connus de l'homme du métier comme agents de couplage (charge inorganique/ élastomère diénique) dans les compositions de caoutchouc destinées à la fabrication de pneumatiques. On utilise en particulier des alkoxysilanes polysulfurés, dits "symétriques" ou "asymétriques" selon leur structure particulière, tels que décrits dans les brevets US-A-3 842 111, US-A-3 873 489, US-A-3 978 103, US-A-3 997 581, US-A-4 002 594, US-A-4 072 701, US-A-4 129 585, ou dans les brevets ou demandes de brevet plus récents US-A-5 580 919, US-A-5 583 245, US-A-5 650 457, US-A-5 663 358, US-A-5 663 395, US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui décrivent en détail de tels composés connus.

Conviennent en particulier pour la mise en oeuvre de l'invention, sans que la définition ci-après soit limitative, des ASPS dits "symétriques" répondant à la formule générale (I) suivante:

$$\text{(I)} \qquad Z - A - S_n - A - Z \,,$$

dans laquelle:

- n est un entier de 2 à 8 (de préférence de 2 à 5);
- A est un radical hydrocarboné divalent;
- Z répond à l'une des formules ci-après:

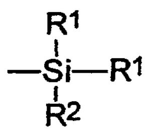 ; 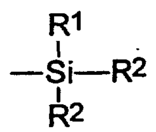 ; 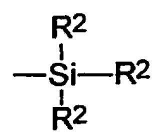 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$;
- les radicaux $R^2$, substitués ou non substitués, identiques ou différents entre eux, représentent un groupe alkoxyle en $C_1$-$C_{18}$ ou cycloalkoxyle en $C_5$-$C_{18}$.

Dans le cas d'un mélange d'ASPS répondant à la formule (I) ci-dessus, notamment des mélanges usuels disponibles commercialement, on comprendra que la valeur moyenne des "n" est un nombre fractionnaire, de préférence compris dans un domaine de 2 à 5.

Le radical A, substitué ou non substitué, est de préférence un radical hydrocarboné divalent, saturé ou non saturé, comportant de 1 à 18 atomes de carbone. Conviennent notamment des groupements alkylène en $C_1$-$C_{18}$ ou des groupements arylène en $C_6$-$C_{12}$, plus particulièrement des alkylènes en $C_1$-$C_{10}$, notamment en $C_2$-$C_4$, en particulier le propylène.

Les radicaux $R^1$ sont préférentiellement des groupes alkyle en $C_1$-$C_6$, cyclohexyle ou phényle, notamment des groupes alkyle en $C_1$-$C_4$, plus particulièrement le méthyle et/ou l'éthyle. Les radicaux $R^2$ sont préférentiellement des groupes alkoxyle en $C_1$-$C_8$ ou cycloalkoxyle en $C_5$-$C_8$, plus particulièrement le méthoxyle et/ou l'éthoxyle.

Préférentiellement, l'ASPS utilisé est un polysulfure, en particulier un disulfure ou un tétrasulfure, de bis-alkoxyl($C_1$-$C_4$)silylalkyle($C_1$-$C_{10}$), plus préférentiellement encore de bis(alkoxyl($C_1$-$C_4$)silylpropyle), en particulier de bis(trialkoxyl($C_1$-$C_4$)silylpropyle), notamment de bis(3-triéthoxysilylpropyle) ou de bis(3-triméthoxysilylpropyle).

Le disulfure de bis(triéthoxysilylpropyle) ou TESPD, de formule $[(C_2H_5O)_3Si(CH_2)_3S]_2$, est commercialisé par exemple par la société Degussa sous les dénominations Si266 ou Si75 (dans le second cas, sous forme d'un mélange de disulfure (à 75% en poids) et de polysulfure), ou encore par la société Witco sous la dénomination Silquest A1589. Le tétrasulfure de bis(triéthoxysilylpropyle) ou TESPT, de formule $[(C_2H_5O)_3Si(CH_2)_3S_2]_2$, est commercialisé par exemple par la société Degussa sous la dénomination Si69 (ou X50S lorsqu'il est supporté à 50% en poids sur du noir de

carbone), ou encore par la société Witco sous la dénomination Silquest A1289 (dans les deux cas mélange commercial de polysulfures avec une valeur moyenne pour n qui est proche de 4).

On utilise tout préférentiellement le TESPT. Mais un mode de réalisation avantageux de l'invention consiste à utiliser le TESPD, certes moins actif que le TESPT lorsqu'il est utilisé seul, mais dont l'efficacité est sensiblement améliorée par la présence de l'aldimine et du dérivé guanidique.

Comme autre exemple d'organosilane ASPS, on peut citer par exemple un organosilane du type oligomérique ou polymérique, tel que décrit par exemple dans les demandes W096/10604 ou DE-A-44 35 311, et répondant à la formule ci-après:

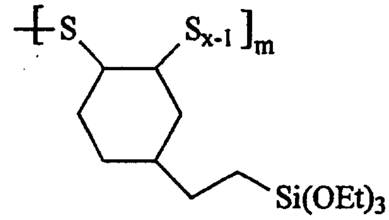

dans laquelle x = 1 à 8, m = 1 à 200, OEt représente le radical éthoxyle.

Dans les compositions de caoutchoucs conformes à l'invention, la teneur en ASPS est préférentiellement comprise entre 0,5 et 15% en poids par rapport à la quantité de charge inorganique renforçante, soit, dans la majorité des cas, entre 1 et 10 pce, plus préférentiellement entre 3 et 8 pce. Mais il est en général souhaitable d'en utiliser le moins possible. La présence de l'aldimine et du dérivé guanidique, dans ces compositions, permet avantageusement de pouvoir utiliser l'ASPS à un taux préférentiel inférieur à 10%, voire même inférieur à 8% en poids par rapport à la quantité de charge inorganique renforçante ; des taux compris entre 4 et 8% sont ainsi avantageusement possibles.

L'ASPS pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'ASPS pourrait également être préalablement greffé (via la fonction "Y") sur la charge inorganique renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé) tout comme l'aldimine et le dérivé guanidique qui lui sont associés dans le système de couplage conforme à l'invention.

II-4. Activation du couplage

Le système de couplage selon l'invention est constitué de l'agent de couplage ASPS précédemment défini et d'un activateur de couplage de cet alkoxysilane. Par "activateur" de couplage, on entend ici un corps (un composé ou une association de composés) qui, mélangé avec l'agent de couplage, augmente l'efficacité de ce dernier.

L'activateur de couplage utilisé conformément à l'invention est formé par l'association d'une aldimine libre de formule (R-CH=N-R) et d'un dérivé guanidique.

A) Aldimine (composant D)

On rappelle que les imines, de manière connue, peuvent être obtenues par réaction d'un aldéhyde ou d'une cétone sur une amine primaire, avec élimination d'eau. Les imines dérivant d'aldéhydes sont appelées aldimines. La synthèse des aldimines a été décrite par exemple dans "*Advanced Organic Chemistry - Reactions, Mechanisms and Structure*", 4ème édition, Jerry March, John Wiley and sons, 1992, p. 896.

Les aldimines utilisées dans les compositions de l'invention répondent à la formule générale R-CH=N-R (formule II) dans laquelle les radicaux R, identiques ou différents, représentent un groupement hydrocarboné.

De préférence, dans cette formule (II), le radical R lié au carbone comporte de 1 à 20 atomes de carbone et le radical R lié à l'azote comporte de 1 à 30 atomes de carbone. Les radicaux R peuvent être linéaires, cycliques ou branchés, substitués ou non substitués, aliphatiques ou aromatiques, saturés ou insaturés ; à titre d'exemple, les deux radicaux R pourraient être joints pour former un cycle en $C_3$-$C_8$, cycle dans lequel peut figurer éventuellement un second hétéroatome choisi par exemple parmi S, O et N.

A titre d'exemples de radicaux R peuvent être cités les alkyles en $C_1$-$C_{18}$, les cycloalkyles en $C_3$-$C_8$, les arylalkyles en $C_7$-$C_{20}$, les aryles en $C_6$-$C_{18}$, les alkylaryles en $C_7$-$C_{20}$, les alkényles en $C_2$-$C_{18}$. Plus préférentiellement, les radicaux R sont choisis parmi les alkyles en $C_1$-$C_{10}$ (notamment méthyle, éthyle, propyle, butyle, pentyle, hexyle,

octyle), les cycloalkyles en $C_3$-$C_8$ (notamment cyclopentyle, cyclohexyle, cycloheptyle), les arylalkyles en $C_7$-$C_{12}$ (notamment benzyle, phényl-éthyle), les aryles en $C_6$-$C_{12}$ (notamment phényle, naphtyle), les alkylaryles en $C_7$-$C_{14}$ (notamment toluyle, xylyle, éthyl-phényle) et les alkényles en $C_2$-$C_{10}$ (notamment propényle, butényle).

A titre d'aldimines utilisables dans les compositions de l'invention, on citera notamment les aldimines dérivées de l'aniline, en particulier les aldimines de formules (III-1) et (III-2) ci-après, ou celles dérivées de la cyclohexylamine, en particulier les aldimines de formule (III-3) à (III-5) ci-après.

L'invention est de préférence mise en oeuvre avec une (au moins une) aldimine choisie parmi les composés de formule (III) ci-après:

(III-1)

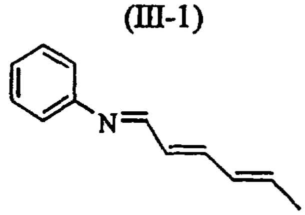

(III-2)

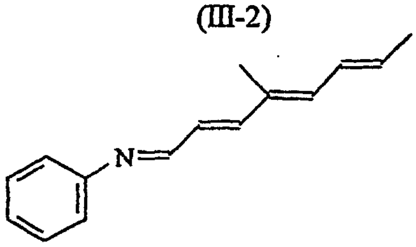

(III-3)

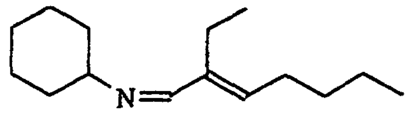

(III-4)

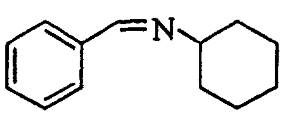

(III-5)

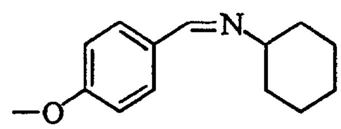

De préférence, au moins l'un des deux radicaux R de l'aldimine est un groupement aryle, en particulier un groupement phényle. Plus préférentiellement encore, les aldimines sont choisies parmi les aldimines dérivées de l'aniline, en particulier les aldimines de formules (III-1) et (III-2) ci-dessus.

L'homme du métier, après avoir pris connaissance de l'invention, saura ajuster la teneur optimale en aldimine en fonction de l'application visée, de la charge inorganique utilisée et de la nature de l'élastomère mis en oeuvre, dans un domaine compris de préférence entre 0,1 et 2 pce, plus préférentiellement entre 0,2 et 1 pce ; des taux compris entre 0,2 et 0,6 pce, par exemple, sont avantageusement possibles pour les compositions destinées à des bandes de roulement de pneumatiques tourisme.

Bien entendu, la teneur optimale en aldimine sera choisie, en premier lieu, en fonction de la quantité d'ASPS utilisée. Préférentiellement, dans le système de couplage selon l'invention, la quantité d'aldimine représente entre 1% et 20% en poids par rapport à la quantité d'ASPS ; en dessous des taux minima indiqués l'effet risque d'être insuffisant, alors qu'au delà des taux maxima indiqués ci-dessus on n'observe généralement plus d'amélioration du couplage alors que les coûts de la composition augmentent et que l'on risque d'autre part d'être exposé aux risques de grillage. Pour les raisons exposées ci-dessus, la quantité d'aldimine est plus préférentiellement comprise entre 3% et 12% par rapport au poids d'ASPS.

De préférence, dans les compositions de caoutchouc selon l'invention, la quantité totale d'ASPS et d'aldimine représente moins de 10%, plus préférentiellement entre 5% et 10% en poids par rapport à la quantité de charge inorganique renforçante. Ceci correspond dans la majorité des cas à un taux (ASPS + aldimine) compris entre 1 et 10 pce, plus préférentiellement entre 4 et 8 pce.

B) Dérivé guanidique (composant E)

Le second composant nécessaire à l'activation du couplage est un dérivé guanidique, c'est-à-dire une guanidine substituée. Les guanidines substituées sont bien connues de l'homme du métier, en particulier comme agents de vulcanisation, et ont été décrites dans un très grand nombre de documents (voir par exemple "*Vulcanization and vulcanizing agents*", W. Hofmann, McLaren and sons, Londres, 1967 ; EP-A-0 683 203 ou US-A-5 569 721).

Dans les compositions conformes à l'invention, on utilise de préférence la N,N'-diphénylguanidine (en abrégé "DPG") répondant à la formule particulière (IV-1) ci-dessous:

(IV-1)

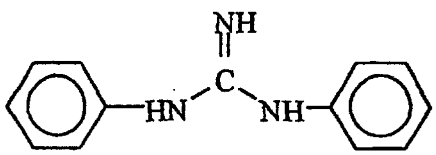

Mais on peut aussi utiliser des dérivés guanidiques autres que la DPG, en particulier d'autres dérivés guanidiques aromatiques répondant à la formule générale (IV) ci-dessous:

(IV)

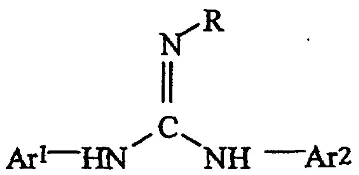

dans laquelle $Ar^1$ et $Ar^2$ représentent un groupement aryle, substitué ou non substitué, de préférence un groupement phényle, et R représente un hydrogène ou un groupement hydrocarboné. A titre d'exemples de composés répondant à la formule (IV) ci-dessus, on peut citer, outre la DPG déjà mentionnée, la triphénylguanidine (TPG) ou encore la di-o-tolylguanidine (DOTG) de formule (IV-2):

(IV-2)

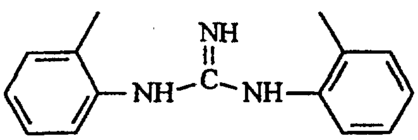

Dans les compositions conformes à l'invention, la quantité de dérivé guanidique représente de préférence entre 0,5% et 4% en poids par rapport à la quantité de charge inorganique renforçante, plus préférentiellement entre 1% et 3%, soit de préférence entre 0,25 et 4 pce, plus préférentiellement encore entre 0,5 et 2 pce. En dessous des taux minima indiqués l'effet d'activation risque d'être insuffisant, alors qu'au-delà des maxima indiqués on n'observe généralement plus d'amélioration du couplage, tout en s'exposant là aussi à des risques de vulcanisation prématurée.

De préférence, dans les compositions de l'invention, le système de couplage constitué par l'ASPS et l'activateur de couplage (aldimine+dérivé guanidique) représente au total entre 2% et 20%, plus préférentiellement entre 5% et 15% en poids par rapport à la quantité de charge inorganique renforçante. Dans la plupart des cas, ce système de couplage s'est avéré suffisamment performant, pour les besoins des compositions destinées à la fabrication de pneumatiques, en particulier celles destinées aux bandes de roulement de pneumatiques pour véhicules tourisme,

pour un taux inférieur à 12%, voire même inférieur à 10% en poids par rapport à la quantité de charge inorganique renforçante. Par rapport au poids d'élastomère diénique, le taux de système de couplage selon l'invention est de préférence compris entre 2 et 15 pce, plus préférentiellement entre 5 et 10 pce.

II-5. Additifs divers

Bien entendu, les compositions de caoutchouc conformes à l'invention comportent également tout ou partie des additifs habituellement utilisés dans les compositions de caoutchouc diénique réticulables au soufre et destinées à la fabrication de pneumatiques, comme par exemple des plastifiants, des pigments, des agents de protection du type antioxydants, antiozonants, un système de réticulation à base soit de soufre, soit de donneurs de soufre et/ou de peroxyde et/ou de bismaléimides, des accélérateurs de vulcanisation, des activateurs de vulcanisation, des huiles d'extension, etc. A la charge inorganique renforçante peut être également associée, si besoin est, une charge blanche conventionnelle non renforçante, comme par exemple des particules d'argile, de bentonite, talc, craie, kaolin, oxydes de titane.

Les compositions conformes à l'invention peuvent également contenir, en complément des ASPS, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes). Ces compositions pourraient contenir, en plus, des agents de couplage autres que des ASPS.

II-6. Préparation des compositions de caoutchouc

Les compositions sont fabriquées dans des mélangeurs appropriés, de manière connue de l'homme du métier, typiquement en utilisant deux phases de préparation successives, une première phase de travail thermo-mécanique à haute température suivie d'une seconde phase de travail mécanique à plus basse température, telles que décrites par exemple dans les demandes EP-A-0 501 227, EP-A-0 810 258 ou W099/28376 précitées.

La première phase de travail thermo-mécanique (parfois qualifiée de phase "non-productive") est destinée à mélanger de manière intime, par malaxage, les différents ingrédients de la composition, à l'exception du système de vulcanisation. Elle est conduite dans un dispositif de malaxage approprié tel qu'un mélangeur interne ou une boudineuse jusqu'à atteindre, sous l'effet du travail mécanique et du fort cisaillement imposé au mélange, une température maximale généralement comprise entre 120°C et 190°C, de préférence comprise entre 130°C et 180°C.

Cette première phase peut comporter elle-même une seule ou plusieurs étapes de travail thermo-mécanique, séparées par exemple par une ou plusieurs étapes intermédiaires de refroidissement. Les différents ingrédients de la composition, élastomère(s), charge renforçante et son système de couplage, et les divers autres composants ("additifs") peuvent être incorporés dans le mélangeur en une ou plusieurs fois, soit au cours de la première étape thermo-mécanique, soit de manière échelonnée au cours des différentes étapes thermo-mécaniques, le cas échéant. La durée totale de ce travail thermo-mécanique (typiquement entre 1 et 20 min, par exemple entre 2 et 10 min) est choisie en fonction des conditions opératoires particulières, en particulier de la température maximale choisie, de la nature et du volume des constituants, l'important étant que soit obtenue dans la matrice élastomérique une bonne dispersion des différents ingrédients qui réagissent entre eux, permettant ainsi d'abord une bonne mise en oeuvre de la composition à l'état cru, ensuite un niveau suffisant de renforcement, après cuisson, par la charge renforçante et son système de couplage intermédiaire.

Après refroidissement du mélange ainsi obtenu, une seconde phase de travail mécanique est alors mise en oeuvre, à une température plus basse. Parfois qualifiée de phase "productive", cette phase de finition consiste à incorporer par mélangeage le système de vulcanisation (ou réticulation), dans un dispositif adapté, par exemple un outil à cylindres. Elle est conduite pendant une durée appropriée (typiquement entre 1 et 30 min, par exemple entre 2 et 5 min) et à une température suffisamment basse (typiquement inférieure à 120°C, par exemple entre 60°C et 100°C), dans tous les cas inférieure à la température de vulcanisation du mélange, de manière à se prémunir d'une vulcanisation prématurée (grillage).

Selon un mode de réalisation préférentiel du procédé selon l'invention, tous les constituants de base des compositions conformes à l'invention, à savoir (ii) la charge inorganique renforçante et le système de couplage selon l'invention constitué par l'association de (iii) l'ASPS, de (iv) l'aldimine et du (v) dérivé guanidique, sont incorporés à (i) l'élastomère diénique au cours de la première phase dite non-productive, c'est-à-dire que l'on introduit dans le mélangeur et que l'on malaxe thermomécaniquement, en une ou plusieurs étapes, au moins ces différents constituants de

base jusqu'à atteindre une température maximale comprise entre 120°C et 190°C, de préférence comprise entre 130°C et 180°C.

A titre d'exemple, la première phase (non-productive) est conduite en deux étapes successives d'une durée de 1 à 5 minutes, dans un mélangeur interne à palettes usuel du type "Banbury" dont la température de cuve initiale est de l'ordre de 60°C. On introduit d'abord l'élastomère (ou les élastomères) puis, après 1 minute par exemple de malaxage, la charge renforçante et son système de couplage associé ; on continue à malaxer puis, par exemple 1 minute plus tard, on ajoute les divers additifs, y compris les éventuels agents de recouvrement ou de mise en oeuvre complémentaires, à l'exception du système de vulcanisation (soufre et accélérateur primaire type sulfénamide). Lorsque la densité apparente de la charge renforçante (ou d'une des charges renforçantes si plusieurs sont utilisées) est relativement faible (cas par exemple des silices), il peut être préférable de fractionner en plusieurs fois l'introduction de cette dernière, et le cas échéant celle de son système de couplage, pour faciliter son incorporation à la matrice élastomérique, par exemple la moitié voire les 3/4 environ de la charge après la première minute de malaxage, le reste après deux minutes de malaxage. Le travail thermo-mécanique est conduit ainsi jusqu'à ce que soit atteinte une température maximale dite "de tombée" comprise par exemple entre 150°C et 170°C. On récupère le bloc de mélange ainsi obtenu et on le refroidit à une température inférieure à 100°C. Après refroidissement, une seconde étape thermo-mécanique est conduite dans le même ou un autre mélangeur dans le but de faire subir au mélange un traitement thermique complémentaire et d'obtenir notamment une meilleure dispersion de la charge renforçante ; bien entendu, certains des additifs tels que par exemple l'acide stéarique, la cire antiozone, l'agent antioxydant, l'oxyde de zinc ou autre additif, peuvent n'être introduits dans le mélangeur, en tout ou partie, qu'au cours de cette seconde étape de travail thermo-mécanique. Le résultat de cette première phase thermo-mécanique est alors repris sur un mélangeur externe à cylindres, à basse température (par exemple entre 30°C et 60°C) et on ajoute le système de vulcanisation ; le tout est alors mélangé (phase productive) pendant quelques minutes, par exemple entre 2 et 5 minutes.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis tels que des bandes de roulement, des nappes sommet, des flancs, des nappes carcasse, des talons, des protecteurs, des chambres à air ou des gommes intérieures étanches pour pneu sans chambre.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté et de la cinétique de vulcanisation de la composition considérée.

Il va de soi que l'invention concerne les compositions de caoutchouc précédemment décrites tant à l'état dit "cru" (i.e., avant cuisson) qu'à l'état dit "cuit" ou vulcanisé (i.e., après réticulation ou vulcanisation).

Bien entendu, les compositions conformes à l'invention peuvent être utilisées seules ou en coupage avec toute autre composition de caoutchouc utilisable pour la fabrication de pneumatiques.

## III. EXEMPLES DE REALISATION DE L'INVENTION

### III-1. Synthèse des aldimines

Les aldimines utilisées dans les essais qui suivent ont été synthétisées selon les modes opératoires décrits ci-après:

- composé de formule III-1: cette aldimine est synthétisée à partir de l'aniline et du 2,4-hexadiénal, comme suit ; dans un tricol surmonté d'un système réfrigérant à boules et d'un appareil type Dean Stark pour récupération de l'eau formée, on introduit 100 ml (millilitres) de toluène et 27,92 g (soit 0,3 mol) d'aniline ; le milieu réactionnel est alors agité et chauffé ; lorsque le reflux du toluène est atteint, 28,84 g (soit 0,3 mol) de 2,4-hexadiénal sont additionnés à l'aide d'une ampoule de coulée ; au bout de deux heures, 5,1 ml d'eau sont formés et la réaction est arrêtée ; la solution est ensuite concentrée à l'évaporateur rotatif, sans dépasser une température de 50°C afin de ne pas dégrader le produit obtenu ; ce dernier est un liquide très visqueux, de couleur marron foncé, dont le constituant majoritaire est le composé attendu de formule III-1, comme attesté par analyse RMN ($^1$H et $^{13}$C ) et spectrométrie de masse.

- composé de formule III-2: dans un tricol surmonté d'un réfrigérant à boules, on introduit 25 g de tamis moléculaire et 100 ml de toluène ; le mélange est agité quelques minutes et 9,3 g (0,12 mol) d'aniline sont ajoutés ; puis 9,25 g (0,11 mol) de trans-2-penténal sont additionnés à l'aide d'une ampoule de coulée ; le milieu réactionnel est agité à 25°C pendant 16 heures ; la solution est ensuite filtrée sur un fritté de porosité 4 et concentrée à l'évaporateur rotatif ; enfin, une distillation sous vide permet d'éliminer l'excès d'aniline. On récupère 8,5 g d'un produit huileux

de couleur jaune orangé dont le composant majoritaire est le composé attendu de formule III-2 (analyse RMN et spectrométrie de masse).

- composé de formule III-3: dans un tricol surmonté d'un réfrigérant à boules et d'un appareil Dean Stark, on introduit 100 ml de toluène et 29,75 g (0,3 mol) de cyclohexylamine ; le milieu réactionnel est alors agité et chauffé ; lorsque le reflux du toluène est atteint, 25,84 g (soit 0,3 mol) de valéraldéhyde sont additionnés à l'aide d'une ampoule de coulée ; au bout de deux heures, 5,1 ml d'eau sont formés et la réaction est arrêtée ; la solution est ensuite concentrée à l'évaporateur rotatif, sans dépasser une température de 50°C afin de ne pas dégrader le produit ; après distillation (élimination de l'aniline résiduelle), on obtient 2 g d'un liquide huileux de couleur orange dont le composant principal est le composé attendu de formule III-3 (analyse RMN et spectrométrie de masse).

- composés de formules III-4 et III-5: ces deux aldimines connues sont synthétisées à partir de la cyclohexylamine et d'un aldéhyde aromatique (benzaldéhyde pour le composé III-4 et p-anisaldéhyde pour le composé III-5), comme suit ; dans un tricol de 250 ml, surmonté du système réfrigérant et de l'appareil Dean Stark, on dilue, dans 50 ml de toluène, 19,84 g (soit 0,2 mol) de cyclohexylamine fraîchement distillée ; à l'aide d'une ampoule de coulée, on introduit lentement (environ 2 heures), dans ce mélange maintenu sous agitation, 21,22 g (soit 0,2 mol) de benzaldéhyde ; une fois l'addition terminée, le milieu réactionnel est porté à reflux du toluène (environ 110°C), cette étape permettant d'éliminer l'eau résultant de la condensation des deux réactifs ; lorsque toute l'eau attendue est recueillie, le milieu réactionnel est récupéré et la solution est concentrée sous vide (élimination du toluène) ; un produit huileux (couleur jaune orangé) correspondant à l'aldimine III-4 est ainsi obtenu. La même opération est effectuée avec le para-anisaldéhyde (0,2 mol soit 27,23g) et conduit à l'aldimine III-5. Des analyses RMN confirment la structure des produits attendus.

Les aldimines ainsi synthétisées sont utilisées telles quelles, sans étape de purification supplémentaire.

III-2. Préparation des compositions de caoutchouc

On procède, pour tous les essais qui suivent, en deux étapes thermo-mécaniques séparées par une phase de refroidissement, de la manière suivante.

On introduit dans un mélangeur interne de laboratoire (0,4 litre), du type "Banbury", rempli à 70 % et dont la température initiale de la cuve est d'environ 60°C, successivement le ou les élastomères, environ une minute plus tard les 2/3 de la charge inorganique renforçante et de son système de couplage associé, encore une minute plus tard le reste de la charge renforçante, de son système de couplage associé, ainsi que les divers additifs à l'exception de l'antioxydant, de l'oxyde zinc et du système de vulcanisation (soufre et sulfénamide) ; on conduit ainsi une première étape de travail thermomécanique pendant 3 à 4 minutes environ jusqu'à atteindre une température maximale de tombée de 165°C environ ; le bloc élastomérique est alors récupéré puis refroidi. Puis, une seconde étape est conduite dans le même mélangeur avec les mêmes conditions : le bloc élastomérique est alors soumis à un second travail thermo-mécanique d'une durée de 3 à 4 minutes également, avec ajout de l'oxyde de zinc et de l'antioxydant, jusqu'à atteindre une température maximale de tombée de 165°C environ.

On récupère le mélange ainsi obtenu, on le refroidit puis on ajoute soufre et sulfénamide sur un mélangeur externe (homo-finisseur) à 30°C, en mélangeant encore le tout (phase productive) pendant 3 à 4 minutes.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement. L'étape de vulcanisation (cuisson) est conduite pendant 40 min à 150°C.

Dans les essais qui suivent, la charge inorganique renforçante (silice et/ou alumine) constitue la totalité de la charge renforçante, utilisée à un taux préférentiel compris dans un domaine de 50 à 100 pce ; mais il va de soi qu'une fraction de cette dernière, de préférence minoritaire, pourrait être remplacée par du noir de carbone.

III-3. Essais

A) Essai 1

Dans ce premier essai, on compare trois compositions de caoutchouc (mélange d'élastomères diéniques SBR et BR) renforcées de silice, destinées à la fabrication de bandes de roulement pour pneumatiques. L'élastomère SBR est un SBR préparé en solution, il comprend 26,5% de styrène, 59,5% de motifs polybutadiène 1-2 et 23% de motifs polybutadiène 1-4 trans ; l'élastomère BR comporte 93% de motifs 1-4 cis.

Ces trois compositions sont identiques à la différence près que deux d'entre elles (compositions N°2 et N°3) comportent en plus une très faible quantité (0,5 pce soit 7,8% en poids par rapport à la quantité d'ASPS) d'aldimine (aldimine de formule III-2 pour la composition N°2 et aldimine de formule III-3 pour la composition N°3). Le taux d'ASPS (TESPT) est dans les trois cas égal à 6,4 pce (soit 8% en poids par rapport à la quantité de silice). Chaque composition comporte en outre 1,5 pce de DPG (soit environ 1,9% en poids par rapport à la quantité de silice). Le taux de système de couplage conforme à l'invention (TESPT+aldimine+DPG) représente avantageusement, dans les compositions N°2 et N°3, moins de 12% (précisément 10,5%) en poids par rapport à la quantité de charge inorganique renforçante.

Les tableaux 1 et 2 donnent la formulation des différentes compositions (tableau 1 - taux des différents produits exprimés en pce), leurs propriétés avant et après vulcanisation. La figure 1 reproduit les courbes de module en fonction de l'allongement pour ces différentes compositions, ces courbes étant notées C1, C2 et C3 correspondant respectivement aux compositions N°1, N°2 et N°3.

L'examen des résultats du tableau 2 montre que les compositions selon l'invention N°2 et N°3, comparées à la composition témoin N°1, présentent à l'état cru une viscosité Mooney plus faible, donc des propriétés de mise en oeuvre sensiblement améliorées, des temps de grillage certes plus courts mais qui restent acceptables (on note surtout un effet sensible d'accélération de vulcanisation de la part du composé de formule III-2). A l'état cuit, les compositions de l'invention (N°2 et N°3) présentent des propriétés sensiblement améliorées :

- modules aux fortes déformations (M100 et M300) plus élevés et rapport M300/M100 supérieur, indicateurs pour l'homme du métier d'un meilleur renforcement de la composition par la charge inorganique renforçante;
- des pertes hystérétiques (PH) plus faibles (et donc meilleures);
- une contrainte à la rupture identique.

La figure 1 annexée confirme les résultats ci-dessus : pour des allongements de 100% et plus, toutes les valeurs de module sont supérieures dans le cas des compositions N°2 et N°3 ; dans un tel domaine d'allongements, ceci illustre clairement une meilleure interaction entre la charge inorganique renforçante et l'élastomère. On note en particulier l'excellente performance enregistrée avec la composition N°2 comportant l'aldimine de formule III-2 (courbe C2 située très au-dessus de la courbe témoin C1).

En résumé, tous les résultats obtenus après cuisson sont représentatifs d'un meilleur couplage entre la charge inorganique renforçante et l'élastomère diénique, en d'autres termes d'une activation, par l'aldimine et le dérivé guanidique combinés, de la fonction de couplage de l'ASPS.

<u>B) Essai 2</u>

On compare dans cet essai trois compositions de caoutchouc (mélange SBR/BR) identiques aux différences près qui suivent:

- composition N°4: TESPT (6,4 pce), avec DPG (1,5 pce) mais sans aldimine;
- composition N°5: TESPT (6,4 pce) activé par 1,5 pce de DPG et 0,2 pce (soit 3,1 % en poids par rapport à la quantité de TESPT) d'aldimine de formule III-1;
- composition N°6: TESPT (6,4 pce) activé par 1,5 pce de DPG et 0,4 pce (soit 6,25% par rapport à la quantité de TESPT) d'aldimine de formule III-1.

Seules les compositions N°5 et N°6 sont donc conformes à l'invention ; la composition N°4 est le témoin de cet essai. Les tableaux 3 et 4 donnent la formulation des différentes compositions, leurs propriétés avant et après cuisson. La figure 2 reproduit les courbes de module en fonction de l'allongement, ces courbes étant notées C4 à C6 et correspondant respectivement aux compositions de caoutchouc N°4 à N°6. Dans les compositions N°5 et N°6 conformes à l'invention, la quantité totale (TESPT+aldimine) reste avantageusement inférieure à 10% (respectivement 8,25% et 8,5%) en poids par rapport à la quantité de charge inorganique renforçante. Quant au système de couplage de l'invention (TESPT+aldimine+DPG), il représente au total moins de 12% (respectivement 10,1% et 10,4%) en poids par rapport à la quantité de charge inorganique renforçante.

L'examen des résultats du tableau 4 montre que les compositions selon l'invention N°5 et N°6, comparées à la composition témoin N°4, présentent à l'état cru une viscosité Mooney légèrement supérieure, ce que l'on peut attribuer à une action accélératrice de vulcanisation de la part de l'aldimine utilisée (effet particulièrement notable dans le cas de la composition N°6 comportant le taux le plus élevé d'aldimine).

A l'état cuit les propriétés des compositions de l'invention (N°5 et N°6) sont améliorées: modules M100 et M300 supérieurs et rapport M300/M100 plus élevés (indicateurs d'un meilleur renforcement), pertes hystérétiques (PH) légèrement plus faibles pour la composition N°6, les pertes PH de la composition N°5 étant par ailleurs identiques à celles du témoin. La figure 2 annexée confirme bien ces résultats : pour les allongements les plus élevés (au-delà

de 200 ou 300%), on note que les valeurs de module sont supérieures dans le cas des compositions N°5 et N°6, ce qui illustre un couplage légèrement amélioré entre la charge inorganique renforçante et l'élastomère diénique.

C) Essai 3

Cet essai a pour but de montrer qu'il est possible, grâce à l'activation apportée par l'aldimine et le dérivé guanidique, d'abaisser de manière sensible la quantité d'ASPS sans pénaliser les propriétés de renforcement des compositions par la charge inorganique.

On compare ici trois compositions de caoutchouc (mélange SBR/BR), identiques aux différences près qui suivent:

- composition N°7: TESPT (6,4 pce), avec DPG (1,5 pce) mais sans aldimine;
- composition N°8: TESPT (5 pce), avec DPG (1,5 pce) mais sans aldimine;
- composition N°9: TESPT (5 pce) activé par 1,5 pce de DPG et 0,3 pce (soit 6% en poids par rapport à la quantité de TESPT) d'aldimine de formule III-1.

Seule la composition N°9 est donc conforme à l'invention ; la composition N°7 est la composition référence de l'art antérieur, la composition N°8 représente un témoin avec un taux identique de TESPT et de DPG, par rapport à la composition N°9. Les tableaux 5 et 6 donnent la formulation des différentes compositions, leurs propriétés avant et après cuisson.

La figure 3 reproduit les courbes de module en fonction de l'allongement, ces courbes étant notées C7 à C9 et correspondant respectivement aux compositions de caoutchouc N°7 à N°9.

On note que, dans la composition N°7 selon l'art antérieur, le taux de TESPT représente 8% (en poids) par rapport à la quantité de silice. Ce taux, qui est déjà avantageusement bas par rapport aux taux usuels pratiqués, est cependant supérieur de 30% au taux de TESPT utilisé dans la composition N°9 conforme à l'invention.

Dans cette composition conforme à l'invention N°9, la quantité de TESPT représente avantageusement moins de 8% (précisément 6,25%) en poids par rapport à la quantité de silice. La quantité totale (TESPT+aldimine) est elle-même inférieure à 8% (précisément 6,6%) en poids par rapport à la quantité de silice. Quant au système de couplage conforme à l'invention (TESPT+aldimine+DPG), il représente au total, fort avantageusement, moins de 10% (précisément 8,5%) en poids par rapport à la quantité de charge inorganique renforçante.

L'étude des différents résultats montre que la composition N°9 conforme à l'invention présente des performances après cuisson globalement supérieures à celle de la composition témoin N°8 contenant le même taux de TESPT, et des performances sensiblement équivalentes à celles de la composition témoin N°7 malgré un taux de TESPT nettement plus bas dans la composition de l'invention:

- module aux fortes déformations (M300) plus élevé que celui de la composition N°8 ; rapport M300/M100 identique à celui de la composition N°7, supérieur à celui de la composition N°8;
- pertes hystérétiques (PH) identiques à celles de la composition N°7, nettement plus faibles (et donc meilleures) que celles de la composition N°8;
- des propriétés à la rupture équivalentes à celles de la composition N°7.

La figure 3 annexée confirme bien l'effet d'activation de couplage apportée par l'aldimine et le dérivé guanidique : on voit nettement que les valeurs de module, pour des allongements de 100% et plus, sont sensiblement identiques pour les compositions N°7 et N°9 (courbes C7 et C9 quasiment confondues), et situées nettement au-dessus de la courbe C8 (composition N°8).

Ainsi, il est possible d'abaisser de manière notable (ici de 6,4 pce à 5 pce) la quantité de TESPT, dans les compositions de caoutchouc conformes à l'invention, sans affecter les propriétés de renforcement.

Certes, la diminution du taux de silane entraîne, de manière attendue, une augmentation de la viscosité à l'état cru, mais les variations observées restent acceptables ; en particulier, l'homme du métier saura corriger, si besoin est, l'augmentation de viscosité à l'état cru par l'addition d'une faible quantité d'agent de recouvrement tel que décrit précédemment. Quant à la diminution du temps de grillage T5, attribuable à la présence de l'aldimine, elle reste elle aussi acceptable, avec une marge de sécurité encore suffisante vis-à-vis des problèmes de grillage.

D) Essai 4

On compare dans cet essai trois compositions de caoutchouc (mélange SBR et BR), identiques aux différences près qui suivent:

- composition N°10: TESPT (6,4 pce) avec DPG (1,5 pce) mais sans aldimine;
- composition N°11: TESPT (6,4 pce) activé par DPG (1,5 pce) et aldimine de formule III-3 (0,5 pce soit 7,8% en poids par rapport au TESPT);
- composition N°12: TESPT (6,4 pce) activé par DPG (1,5 pce) et aldimine de formule III-4 (0,6 pce soit 9,4% en poids par rapport à la quantité de TESPT).

Seules les compositions N°11 et N°12 sont donc conformes à l'invention ; la composition N°10 est le témoin de cet essai. Les tableaux 7 et 8 donnent la formulation des différentes compositions, leurs propriétés avant et après cuisson. La figure 4 reproduit les courbes de module en fonction de l'allongement, ces courbes étant notées C10 à C12 et correspondant respectivement aux compositions de caoutchouc N°10 à N°12. Dans les compositions N°11 et N°12 conformes à l'invention, la quantité totale (TESPT+aldimine) reste avantageusement inférieure à 10% (respectivement 8,6% et 8,75%) en poids par rapport à la quantité de charge inorganique renforçante. Quant au système de couplage de l'invention (TESPT+aldimine+DPG), il représente au total moins de 12% (respectivement, 10,5% et 10,6%) en poids par rapport à la quantité de charge inorganique renforçante.

L'examen des résultats du tableau 8 montre que les compositions selon l'invention, comparées à la composition témoin N°10, présentent à l'état cru une viscosité Mooney et un temps T5 identiques, donc des propriétés de mise en oeuvre équivalentes, et à l'état cuit des propriétés améliorées : d'une part un rapport M300/M100 supérieur, indicateur d'un meilleur renforcement, d'autre part des pertes hystérétiques (PH) légèrement plus faibles, donc meilleures. La figure 4 annexée confirme bien ces résultats : pour des allongements de 300% et plus, on voit que les valeurs de module sont toujours supérieures dans le cas des compositions N°11 et N°12, ce qui illustre une meilleure interaction entre la charge inorganique renforçante et l'élastomère.

E) Essai 5

L'invention est ici mise en oeuvre avec un disulfure de bis 3-triéthoxysilylpropyle (en abrégé TESPD) à titre d'agent de couplage ASPS. On compare deux compositions de caoutchouc similaires à celles des essais précédents, ces deux compositions étant identiques aux différences près qui suivent:

- composition N°13: TESPD (5,6 pce);
- composition N°14: TESPD (5,6 pce) plus aldimine de formule III-1 (0,4 pce soit 7,1% en poids par rapport à la quantité de TESPD).

Chaque composition comporte en outre 1,5 pce de dérivé guanidique. La composition N°13 est le témoin de cet essai (7% de TESPD par rapport au poids de silice) ; dans la composition N°14 conforme à l'invention, le taux de ASPS représente moins de 8% (précisément 7%) en poids par rapport à la quantité de silice (80 pce), tout comme la quantité (TESPD+aldimine) elle-même (précisément 7,5%). Quant au système de couplage selon l'invention (ici, TESPD+aldimine+DPG), son taux représente avantageusement moins de 10% (précisément 9,4%) en poids par rapport à la quantité de charge inorganique renforçante.

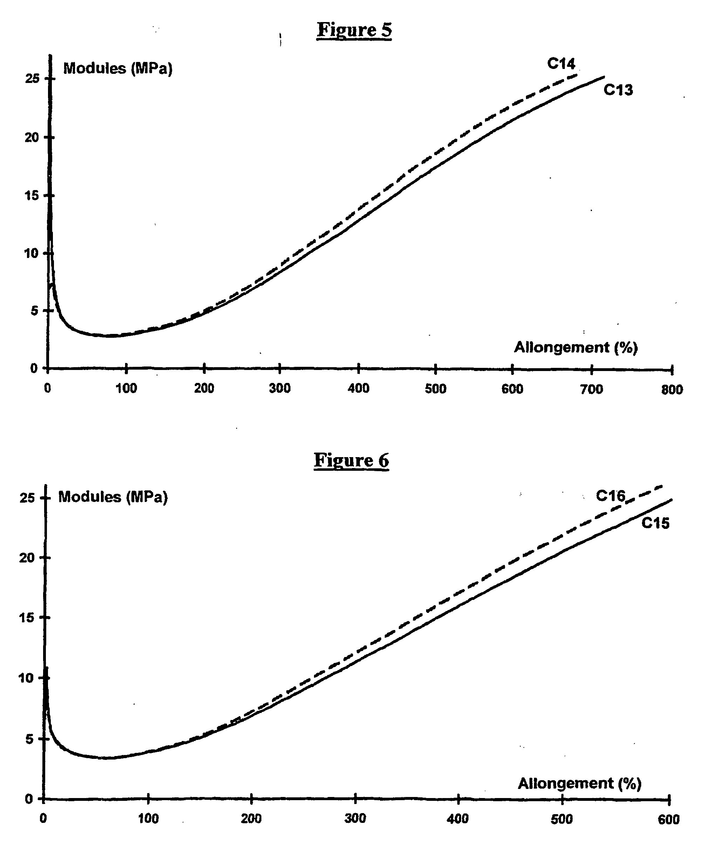

Les tableaux 9 et 10 donnent la formulation des différentes compositions, leurs propriétés avant et après cuisson ; la figure 5 reproduit les courbes de module en fonction de l'allongement, ces courbes étant notées C 13 et C 14 et correspondant respectivement aux compositions N°13 et N°14. On note que l'ajout d'une faible quantité d'aldimine dans la composition N°14 conduit à une amélioration des propriétés de renforcement (valeurs M300 et M300/M100 plus élevées). Cette efficacité de l'aldimine et du dérivé guanidique combinés, comme activateur de couplage du TESPD, est aussi clairement illustrée par les courbes de la figure 5 (courbe C 14 située, pour des allongements supérieurs à 200%, au-delà de la courbe C13).

F) Essai 6

On prépare deux compositions de caoutchouc similaires à celles précédemment testées, la charge renforçante étant ici constituée par un mélange (50/50) de silice et d'alumine renforçantes. L'alumine est une alumine telle que décrite dans la demande EP-A-0 810 258 précitée.

Ces deux compositions sont identiques aux différences près qui suivent:

- composition N°15 : TESPT (6,5 pce);
- composition N°16 : TESPT (6,5 pce) auquel est associée l'aldimine de formule III-1 (0,5 pce soit 7,7% par rapport au poids de TESPT).

Chaque composition comporte en outre 0,9 pce de diphénylguanidine (soit environ 0,9% en poids par rapport

à la quantité de charge inorganique renforçante). La composition N°15 est le témoin de cet essai, elle contient un taux d'ASPS d'environ 6,6% en poids par rapport à la quantité charge inorganique renforçante (6,5 pce de TESPT par rapport à 99 pce de charge inorganique renforçante), mais elle est dépourvue d'aldimine. La composition N°16, conforme à l'invention, comporte le système de couplage conforme à l'invention (TESPT+aldimine+DPG) à un taux avantageusement inférieur à 10% en poids (précisément 8,1%) par rapport à la quantité de charge inorganique renforçante totale.

Les tableaux 11 et 12 donnent la formulation des différentes compositions et leurs propriétés avant et après cuisson (40 min à 150°C). La figure 6 reproduit les courbes de module en fonction de l'allongement, ces courbes étant notées C15 et C16 et correspondant respectivement aux compositions N°15 et N°16.

L'examen des résultats du tableau 12 montre des propriétés comparables à l'état cru, donc des propriétés de mise en oeuvre équivalentes. A l'état cuit, on observe une fois encore des propriétés sensiblement améliorées pour la composition conforme à l'invention : modules M100 et M300 plus élevés, rapport M300/M100 supérieur, pertes hystérétiques (PH) légèrement plus faibles, contrainte à la rupture supérieure. Le couplage amélioré entre l'élastomère diénique et la charge inorganique renforçante est aussi clairement illustrée par la figure 6 (courbe C16 au dessus de la courbe C15, pour des allongements de 200% et plus).

<u>G) Essai 7</u>

Cet essai démontre que la présence d'un dérivé guanidique est une caractéristique essentielle dans le système de couplage selon l'invention.

On compare trois compositions de caoutchouc identiques aux différences près qui suivent:

- composition N°17: TESPT (6,4 pce), avec DPG mais sans aldimine;
- composition N°18 : TESPT (6,4 pce) plus aldimine de formule III-1 (0,5 pce soit 7,8% en poids par rapport à la quantité de TESPT) à laquelle est associé la DPG (1,5 pce);
- composition N°19: TESPT (6,4 pce) avec aldimine mais sans DPG.

Seule la composition N°18 est donc conforme à l'invention ; la composition N°17 est le témoin de cet essai. Les tableaux 13 et 14 donnent la formulation des différentes compositions, leurs propriétés avant et après cuisson.

L'étude des différents résultats montre que la composition N°18 conforme à l'invention, comparée à la composition témoin N°17, présente à l'état cru une viscosité Mooney supérieure, un temps de grillage certes plus faible mais satisfaisant, à l'état cuit des propriétés améliorées : modules M100 et M300 nettement plus élevés, rapport M300/M100 supérieur, pertes (PH) légèrement inférieures. Quant à la composition N°19, dépourvue de dérivé guanidique, on note que ces propriétés sont nettement dégradées par rapport à la composition de l'invention, tant à l'état cru qu'après cuisson (viscosité Mooney plus élevée, pertes PH plus importantes, niveau de renforcement inférieur d'après les valeurs M100, M300 et rapport M300/M100). Clairement, en l'absence de dérivé guanidique, l'aldimine est sans effet sur l'agent de couplage ASPS.

En conclusion, tous les résultats précédents sont représentatifs d'un couplage amélioré entre la charge inorganique renforçante et l'élastomère diénique lorsqu'on utilise, associés à l'ASPS, à la fois une aldimine et un dérivé guanidique. En d'autres termes, ces résultats sont représentatifs d'une activation, par l'aldimine et le dérivé guanidique combinés, de la fonction de couplage remplie par l'ASPS.

Grâce à cette activation, on peut désormais envisager de réduire la quantité d'ASPS, notamment de TESPT, tout en maintenant les propriétés de couplage et donc celles d'usure à des niveaux équivalents ; le coût global des compositions de caoutchouc peut ainsi être abaissé, ainsi que celui des pneumatiques qui les comportent.

Une réduction du taux d'ASPS présente par ailleurs l'avantage, du point de vue de l'environnement (dégagement des VOC - "*Volatile Organic Compounds*"), de conduire à une diminution des taux d'alcool (éthanol dans le cas du TESPT) émis au cours de la fabrication des compositions de caoutchouc, ou lors de la cuisson des articles en caoutchouc incorporant ces compositions.

L'invention permet aussi, si l'on conserve un taux élevé d'ASPS, d'obtenir un niveau de couplage supérieur, et donc d'atteindre un renforcement encore meilleur des compositions de caoutchouc par la charge inorganique renforçante.

L'invention permet ainsi de disposer de bandes de roulement de pneumatiques présentant une très bonne résistance à l'usure combinée à une basse résistance au roulement, même en présence d'un taux d'ASPS (en particulier TESPT) réduit.

Le nouveau système de couplage (charge inorganique/élastomère diénique) conforme à l'invention offre ainsi aux compositions de l'invention un compromis de propriétés particulièrement avantageux par rapport aux compositions de l'art antérieur renforcées d'une charge inorganique.

Tableau 1

| Composition N° : | 1 | 2 | 3 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 6.4 | 6.4 |
| aldimine (4) | - | 0.5 | - |
| aldimine (5) | - | - | 0.5 |
| DPG (6) | 1.5 | 1.5 | 1.5 |
| cire antiozone | 1.5 | 1.5 | 1.5 |
| acide stéarique | 2 | 2 | 2 |
| antioxydant (7) | 1.9 | 1.9 | 1.9 |
| ZnO | 2.5 | 2.5 | 2.5 |
| soufre | 1.1 | 1.1 | 1.1 |
| CBS (8) | 2 | 2 | 2 |

(1 ) SBR solution avec 59,5 % de motifs polybutadiène 1-2 ; 26,5% de styrène ; Tg = -29 °C ; 75 pce SBR sec étendu avec 13,5 pce d'huile aromatique (soit un total de 88,5 pce);

(2) BR avec 4,3 % de 1-2 ; 2,7% de trans ; 93% de cis 1-4 (Tg = -106°C);

(3) silice type "HDS" - Zeosil 1165MP de la société Rhodia sous forme de microperles (BET et CTAB : environ 160 $m^2$/g);

(4) composé de formule III-2;

(5) composé de formule III-3;

(6) N,N'-diphénylguanidine (Vulkacit D de la société Bayer);

(7) N-1,3-diméthylbutyl-N-phényl-paraphénylènediamine; (Santoflex 6-PPD de la société Flexsys);

(8) N-cyclohexyl-2-benzothiazyl-sulfénamide. (Santocure CBS de la société Flexsys).

Tableau 2

| Composition N° : | 1 | 2 | 3 |
|---|---|---|---|
| *Propriétés avant cuisson:* | | | |
| Mooney (UM) | 90 | 81 | 77 |
| T5 (min) | 17 | 9 | 16 |
| *Propriétés après cuisson:* | | | |
| M10 (MPa) | 5.15 | 5.18 | 5.04 |
| M100 (MPa) | 1.53 | 1.86 | 1.69 |
| M300 (MPa) | 1.88 | 2.65 | 2.21 |
| M300 / M100 | 1.23 | 1.42 | 1.31 |
| PH (%) | 31 | 25 | 28 |
| contrainte rupture (MPa) | 22.1 | 22.3 | 21.9 |
| allongement rupture (%) | 608 | 495 | 569 |

Tableau 3

| Composition N° : | 4 | 5 | 6 |
|---|---|---|---|
| SBR (1) | 88.5 | 88.5 | 88.5 |
| BR (2) | 25 | 25 | 25 |

(1) à (3) ; (6) à (8) idem tableau 1;

Tableau 3 (suite)

| Composition N° : | 4 | 5 | 6 |
|---|---|---|---|
| silice (3) | 80 | 80 | 80 |
| huile aromatique | 21.5 | 21.5 | 21.5 |
| TESPT (Si69) | 6.4 | 6.4 | 6.4 |
| aldimine (9) | - | 0.2 | 0.4 |
| DPG (6) | 1.5 | 1.5 | 1.5 |
| cire antiozone | 1.5 | 1.5 | 1.5 |
| acide stéarique | 2 | 2 | 2 |
| antioxydant (7) | 1.9 | 1.9 | 1.9 |
| ZnO | 2.5 | 2.5 | 2. 5 |
| soufre | 1.1 | 1.1 | 1.1 |
| CBS (8) | 2 | 2 | 2 |

(1) à (3) ; (6) à (8) idem tableau 1;
(9) composé de formule III-1.

Tableau 4

| Composition N° : | 4 | 5 | 6 |
|---|---|---|---|
| *Propriétés avant cuisson:* | | | |
| Mooney (UM) | 83 | 87 | 92 |
| T5 (min) | 20 | 14 | 10 |
| *Propriétés après cuisson:* | | | |
| M10 (MPa) | 5.34 | 5.15 | 4.90 |
| M100 (MPa) | 1.77 | 1.78 | 1.81 |
| M300 (MPa) | 2.17 | 2.26 | 2.42 |
| M300 / M100 | 1.23 | 1.27 | 1.34 |
| PH (%) | 28 | 28 | 27 |
| contrainte rupture (MPa) | 22 | 22 | 22.3 |
| allongement rupture (%) | 574 | 550 | 533 |

Tableau 5

| Composition N° : | 7 | 8 | 9 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 5 | 5 |
| aldimine (9) | - | - | 0.3 |
| DPG (6) | 1.5 | 1.5 | 1.5 |
| cire antiozone | 1.5 | 1.5 | 1.5 |
| acide stéarique | 2 | 2 | 2 |
| antioxydant (7) | 1.9 | 1.9 | 1.9 |
| ZnO | 2.5 | 2.5 | 2.5 |
| soufre | 1.1 | 1.1 | 1.1 |
| CBS (8) | 2 | 2 | 2 |

(1) à (9) idem tableau 3.

Tableau 6

| Composition N° : | 7 | 8 | 9 |
|---|---|---|---|
| *Propriétés avant cuisson:* | | | |
| Mooney (UM) | 83 | 93 | 102 |
| T5 (min) | 20 | 18 | 11 |
| *Propriétés après cuisson:* | | | |
| M10 (MPa) | 5.54 | 5.12 | 4.79 |
| M100 (MPa) | 1.79 | 1.58 | 1.56 |
| M300 (MPa) | 2.31 | 1.83 | 2.02 |
| M300 / M100 | 1.29 | 1.16 | 1.29 |
| PH (%) | 28 | 33 | 28 |
| contrainte rupture (MPa) | 23 | 21.3 | 22.8 |
| allongement rupture (%) | 568 | 630 | 584 |

Tableau 7

| Composition N° : | 10 | 11 | 12 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 6.4 | 6.4 |
| aldimine (10) | - | 0.5 | - |
| aldimine (11) | - | - | 0.6 |
| DPG (6) | 1.5 | 1.5 | 1.5 |
| cire antiozone | 1.5 | 1.5 | 1.5 |
| acide stéarique | 2 | 2 | 2 |
| antioxydant (7) | 1.9 | 1.9 | 1.9 |
| ZnO | 2.5 | 2.5 | 2.5 |
| soufre | 1.1 | 1.1 | 1.1 |
| CBS (8) | 2 | 2 | 2 |

(1) à (3) et (6) à (8) idem tableau 1;
(10) N-cyclohexyl benzaldimine (composé III-4);
(11) N-cyclohexyl o-méthoxy benzaldimine (composé III-5).

Tableau 8

| Composition N° : | 10 | 11 | 12 |
|---|---|---|---|
| *Propriétés avant cuisson:* | | | |
| Mooney (UM) | 86 | 85 | 86 |
| T5 (min) | 21 | 20 | 20 |
| *Propriétés après cuisson:* | | | |
| M10 (MPa) | 4.85 | 4.59 | 4.41 |
| M100 (MPa) | 1.59 | 1.61 | 1.52 |
| M300 (MPa) | 1.96 | 2.06 | 1.93 |
| M300 / M100 | 1.23 | 1.28 | 1.27 |

Tableau 8 (suite)

| Composition N° : | 10 | 11 | 12 |
|---|---|---|---|
| *Propriétés après cuisson:* | | | |
| PH (%) | 29 | 27.5 | 28 |
| contrainte rupture (MPa) | 22.8 | 22.9 | 22 |
| allongement rupture (%) | 625 | 592 | 597 |

Tableau 9

| Composition N° : | 13 | 14 |
|---|---|---|
| SBR (1) | 88.5 | 88.5 |
| BR (2) | 25 | 25 |
| silice (3) | 80 | 80 |
| huile aromatique | 21.5 | 21.5 |
| TESPD (Si266) | 5.6 | 5.6 |
| aldimine (9) | | 0.4 |
| DPG (6) | 1.5 | 1.5 |
| cire antiozone | 1.5 | 1.5 |
| acide stéarique | 2 | 2 |
| antioxydant (7) | 1.9 | 1.9 |
| ZnO | 2.5 | 2.5 |
| soufre | 1.1 | 1.1 |
| CBS (8) | 2 | 2 |

(1) à (9) idem tableau 3.

Tableau 10

| Composition N° : | 13 | 14 |
|---|---|---|
| *Propriétés avant cuisson:* | | |
| Mooney (UM) | 83 | 82 |
| T5 (min) | 28 | 15 |
| *Propriétés après cuisson:* | | |
| M10 (MPa) | 4.33 | 5.18 |
| M100 (MPa) | 1.30 | 1.30 |
| M300 (MPa) | 1.44 | 1.51 |
| M300 / M100 | 1.11 | 1.15 |
| PH (%) | 35 | 34 |
| contrainte rupture (MPa) | 22.4 | 22.5 |
| allongement rupture (%) | 718 | 683 |

Tableau 11

| Composition N° : | 15 | 16 |
|---|---|---|
| SBR (1) | 88.5 | 88.5 |
| BR (2) | 25 | 25 |
| silice (3) | 49.5 | 49.5 |

(1) à (9) idem tableau 3;

Tableau 11 (suite)

| Composition N° : | 15 | 16 |
|---|---|---|
| alumine (3bis) | 49.5 | 49.5 |
| huile aromatique | 21.5 | 21.5 |
| TESPT (Si69) | 6.5 | 6.5 |
| aldimine (9) | - | 0.5 |
| ZnO | 2.5 | 2.5 |
| acide stéarique | 2 | 2 |
| antioxydant (6) | 1.9 | 1.9 |
| DPG (7) | 0.9 | 0.9 |
| soufre | 1.1 | 1.1 |
| CBS (8) | 2 | 2 |

(1) à (9) idem tableau 3;
(3bis) alumine "CR125" de la société Baïkowski (sous forme de poudre - BET: environ 105 $m^2/g$).

Tableau 12

| Composition N°: | 15 | 16 |
|---|---|---|
| *Propriétés avant cuisson:* | | |
| Mooney (UM) | 93 | 102 |
| T5(min) | 14 | 11 |
| *Propriétés après cuisson:* | | |
| M10 (MPa) | 5.18 | 5.05 |
| M100 (MPa) | 1.84 | 1.92 |
| M300 (MPa) | 2.17 | 2.41 |
| M300 / M100 | 1.18 | 1.26 |
| PH (%) | 31 | 29 |
| contrainte rupture (MPa) | 21.3 | 22.4 |
| allongement rupture (%) | 598 | 591 |

Tableau 13

| Composition N° : | 17 | 18 | 19 |
|---|---|---|---|
| SBR (1) | 88.5 | 88.5 | 88.5 |
| BR (2) | 25 | 25 | 25 |
| silice (3) | 80 | 80 | 80 |
| huile aromatique | 21.5 | 21.5 | 21.5 |
| TESPT (Si69) | 6.4 | 6.4 | 6.4 |
| aldimine (9) | - | 0.5 | 0.5 |
| ZnO | 2.5 | 2.5 | 2.5 |
| acide stéarique | 2 | 2 | 2 |
| antioxydant (6) | 1.9 | 1.9 | 1.9 |
| DPG (7) | 1.5 | 1.5 | - |
| soufre | 1.1 | 1.1 | 1.1 |
| CBS (8) | 2 | 2 | 2 |

(1) à (9) idem tableau 3.

Tableau 14

| Composition N° : | 17 | 18 | 19 |
|---|---|---|---|
| *Propriétés avant cuisson:* | | | |
| Mooney (UM)<br>T5 (min) | 82<br>16 | 97<br>11 | > 110<br>14 |
| *Propriétés après cuisson:* | | | |
| M10 (MPa)<br>M100 (MPa)<br>M300 (MPa)<br>M300 / M100<br>PH (%)<br><br>contrainte rupture (MPa)<br>allongement rupture (%) | 5.04<br>1.71<br>2.24<br>1.31<br>27<br><br>22.7<br>592 | 4.83<br>1.77<br>2.49<br>1.41<br>26<br><br>23.3<br>558 | 4.68<br>1.54<br>1.74<br>1.13<br>34<br><br>20.4<br>633 |

**Revendications**

1. Composition de caoutchouc utilisable pour la fabrication de pneumatiques, à base d'au moins (i) un élastomère diénique, (ii) une charge inorganique à titre de charge renforçante, (iii) un alkoxysilane polysulfuré ("ASPS ") à titre d'agent de couplage (charge inorganique/élastomère diénique) auquel sont associés (iv) une aldimine (R-CH=N-R) et (v) un dérivé guanidique.

2. Composition selon la revendication 1, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

3. Composition selon les revendications 1 ou 2, la charge inorganique renforçante étant une charge siliceuse ou alumineuse, de préférence une silice hautement dispersible.

4. Composition selon l'une quelconque des revendications 1 à 3, l'ASPS étant un polysulfure de bis-alkoxyl($C_1$-$C_4$) silylalkyle ($C_1$-$C_{10}$).

5. Composition de caoutchouc selon l'une quelconque des revendications 1 à 4, dans laquelle au moins un des radicaux R de l'aldimine est un groupement aryle.

6. Composition de caoutchouc selon l'une quelconque des revendications 1 à 5, l'aldimine étant choisie parmi les aldimines dérivées de l'aniline ou de la cyclohexylamine.

7. Composition de caoutchouc selon l'une quelconque des revendications 1 à 6, dans laquelle la quantité d'aldimine représente entre 1% et 20% en poids par rapport à la quantité d'ASPS.

8. Composition de caoutchouc selon l'une quelconque des revendications 1 à 7, dans laquelle la quantité totale d'ASPS et d'aldimine représente moins de 10% en poids par rapport à la quantité de charge inorganique renforçante.

9. Composition de caoutchouc selon l'une quelconque des revendications 1 à 8, dans laquelle le dérivé guanidique est la N,N'-diphénylguanidine (DPG).

10. Composition de caoutchouc selon l'une quelconque des revendications 1 à 9, dans laquelle la quantité de dérivé guanidique représente entre 0,5 et 4% en poids par rapport à la quantité de charge inorganique renforçante.

11. Composition selon l'une quelconque des revendications 1 à 10, dans laquelle la quantité totale d'ASPS, d'aldimine et de dérivé guanidique représente entre 2% et 20% en poids par rapport à la quantité de charge inorganique

renforçante.

**12.** Composition selon l'une quelconque des revendications 2 à 11, l'élastomère diénique étant un copolymère de butadiène-styrène (SBR) ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

**13.** Composition selon la revendication 12, le SBR étant un SBR préparé en solution.

**14.** Composition selon les revendications 12 ou 13, le SBR étant utilisé en mélange avec un polybutadiène.

**15.** Composition selon la revendication 14, le polybutadiène possédant plus de 90% de liaisons cis-1,4.

**16.** Composition selon l'une quelconque des revendications 1 à 15, la charge inorganique renforçante constituant la totalité de la charge renforçante.

**17.** Composition selon l'une quelconque des revendications 1 à 15, la charge inorganique renforçante étant utilisée en mélange avec du noir de carbone.

**18.** Composition selon l'une quelconque des revendications 4 à 17, l'ASPS étant un polysulfure de bis-alkoxyl($C_1$-$C_4$) silylpropyle.

**19.** Composition selon la revendication 18, l'ASPS étant le disulfure ou le tétrasulfure de bis 3-triéthoxysilylpropyle.

**20.** Composition de caoutchouc selon l'une quelconque des revendications 6 à 19, l'aldimine étant choisie parmi les composés de formule (III-1) à (III-5):

(III-1)

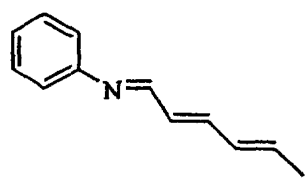

(III-2)

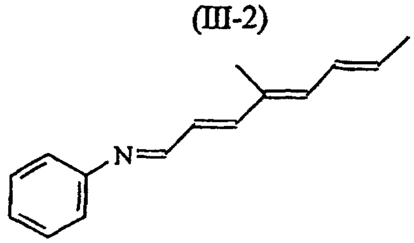

(III-3)

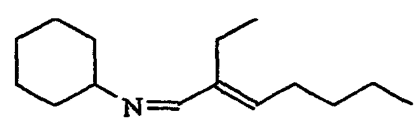

(III-4)

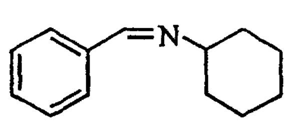

(III-5)

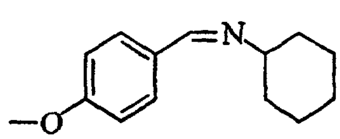

**21.** Composition de caoutchouc selon l'une quelconque des revendications 1 à 20, **caractérisée en ce qu'**elle se trouve à l'état vulcanisé.

**22.** Procédé pour préparer une composition de caoutchouc vulcanisable au soufre et utilisable pour la fabrication de pneumatiques, **caractérisé en ce qu'**on incorpore à (i) un élastomère diénique : (ii) une charge inorganique à titre de charge renforçante ; (iii) un alkoxysilane polysulfuré ("ASPS"); (iv) une aldimine (R-CH=N-R) et (v) un dérivé guanidique, et **en ce qu'**on malaxe thermomécaniquement le tout, en une ou plusieurs étapes, jusqu'à atteindre une température maximale comprise entre 120°C et 190°C.

**23.** Procédé selon la revendication 22, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

**24.** Procédé selon les revendications 22 ou 23, la charge inorganique renforçante étant une charge siliceuse ou alumineuse, de préférence une silice hautement dispersible.

**25.** Procédé selon l'une quelconque des revendications 22 à 24, l'ASPS étant un polysulfure de bis-alkoxyl($C_1$-$C_4$) silylalkyle($C_1$-$C_{10}$).

**26.** Procédé selon l'une quelconque des revendications 22 à 25, dans lequel au moins un des radicaux R de l'aldimine est un groupement aryle.

**27.** Procédé selon l'une quelconque des revendications 22 à 26, l'aldimine étant choisie parmi les aldimines dérivées de l'aniline ou de la cyclohexylamine.

**28.** Procédé selon l'une quelconque des revendications 22 à 27, la quantité d'aldimine représentant entre 1% et 20% en poids par rapport à la quantité d'ASPS.

**29.** Procédé selon l'une quelconque des revendications 22 à 28, la quantité totale d'ASPS et d'aldimine représentant moins de 10% en poids par rapport à la quantité de charge inorganique renforçante.

**30.** Procédé selon l'une quelconque des revendications 22 à 29, le dérivé guanidique étant la N,N-diphénylguanidine (DPG).

**31.** Procédé selon l'une quelconque des revendications 22 à 30, la quantité de dérivé guanidique représentant entre 0,5 et 4% en poids par rapport à la quantité de charge inorganique renforçante.

**32.** Procédé selon l'une quelconque des revendications 22 à 31, la quantité totale d'ASPS, d'aldimine et de dérivé guanidique représentant entre 2% et 20% en poids par rapport à la quantité de charge inorganique renforçante.

**33.** Procédé selon l'une quelconque des revendications 25 à 32, l'ASPS étant un polysulfure de bis-alkoxyl($C_1$-$C_4$) silylpropyle.

**34.** Procédé selon l'une quelconque des revendications 27 à 33, l'aldimine étant choisie parmi les composés de formule (III-1) à (III-5):

(III-1)

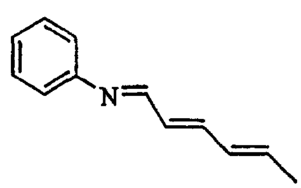

(III-2)

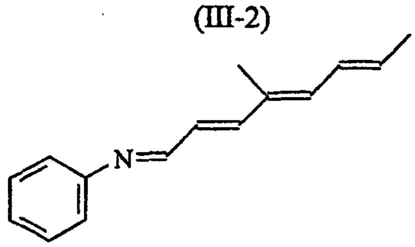

(III-3)

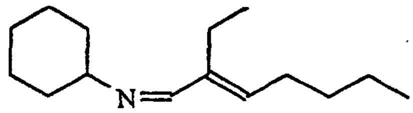

(III-4)

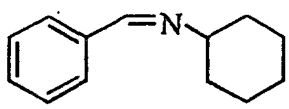

(III-5)

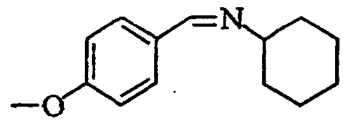

**35.** Procédé selon l'une quelconque des revendications 22 à 34, la température maximale de malaxage étant comprise entre 130°C et 180°C.

**36.** Utilisation d'une composition de caoutchouc conforme à l'une quelconque des revendications 1 à 20, pour la fabrication de pneumatiques ou de produits semi-finis en caoutchouc destinés aux pneumatiques, ces produits semi-finis étant choisis en particulier dans le groupe constitué par les bandes de roulement, les sous-couches, les nappes sommet, les flancs, les nappes carcasse, les talons, les protecteurs, les chambres à air et les gommes intérieures étanches pour pneumatique sans chambre.

**37.** Pneumatique à l'état cru comportant une composition de caoutchouc conforme à l'une quelconque des revendications 1 à 20.

**38.** Pneumatique à l'état vulcanisé comportant une composition de caoutchouc conforme à la revendication 21.

**39.** Produit semi-fini en caoutchouc pour pneumatique, comportant une composition de caoutchouc conforme à l'une quelconque des revendications 1 à 20, ce produit semi-fini étant choisi en particulier dans le groupe constitué par les bandes de roulement, les sous-couches, les nappes sommet, les flancs, les nappes carcasse, les talons, les protecteurs, les chambres à air et les gommes intérieures étanches pour pneu sans chambre.

**40.** Produit semi-fini selon la revendication 39, sous le forme d'une bande de roulement de pneumatique.

**41.** Bande de roulement de pneumatique selon la revendication 40, **caractérisée en ce qu'**elle comporte une composition de caoutchouc selon l'une quelconque des revendications 12 à 15.

**42.** Procédé pour coupler une charge inorganique et un élastomère diénique, dans une composition de caoutchouc, **caractérisé en ce qu'**on incorpore à (i) un élastomère diénique : (ii) une charge inorganique à titre de charge renforçante ; (iii) un alkoxysilane polysulfuré ("ASPS"); (iv) une aldimine (R-CH=N-R) et (v) un dérivé guanidique, et **en ce qu'**on malaxe thermomécaniquement le tout, en une ou plusieurs étapes, jusqu'à atteindre une température maximale comprise entre 120°C et 190°C.

**43.** Procédé selon la revendication 42, l'élastomère diénique étant choisi dans le groupe constitué par les polybutadiènes, les polyisoprènes, le caoutchouc naturel, les copolymères de butadiène, les copolymères d'isoprène et les mélanges de ces élastomères.

**44.** Procédé selon les revendications 42 ou 43, la charge inorganique renforçante étant une charge siliceuse ou alumineuse, de préférence une silice hautement dispersible.

**45.** Procédé selon l'une quelconque des revendications 42 à 44, l'ASPS étant un polysulfure de bis-alkoxyl($C_1$-$C_4$) silylalkyle($C_1$-$C_{10}$).

**46.** Procédé selon l'une quelconque des revendications 42 à 45, dans lequel au moins un des radicaux R de l'aldimine est un groupement aryle.

**47.** Procédé selon l'une quelconque des revendications 42 à 46, l'aldimine étant choisie parmi les aldimines dérivées de l'aniline ou de la cyclohexylamine.

**48.** Procédé selon la revendication 47, l'aldimine étant choisie parmi les composés de formule (III-1) à (III-5):

(III-1)

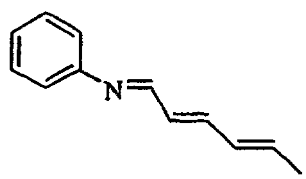

(III-2)

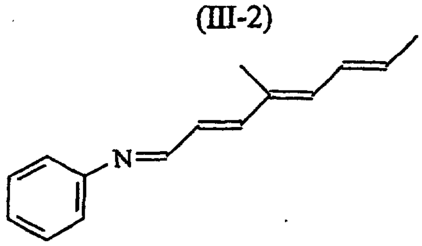

(III-3)

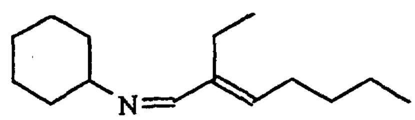

(III-4)

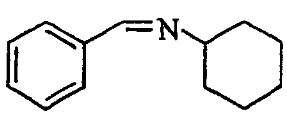

(III-5)

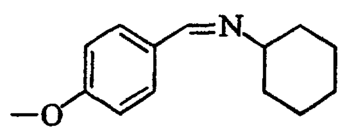

**49.** Procédé selon l'une quelconque des revendications 42 à 48, le dérivé guanidique étant la N,N'-diphénylguanidine (DPG).

**50.** Procédé selon l'une quelconque des revendications 42 à 49, la température maximale de malaxage étant comprise entre 130°C et 180°C.

**51.** Utilisation en combinaison d'une aldimine (R-CH=N-R) et d'un dérivé guanidique, dans une composition de caoutchouc à base d'élastomère diénique renforcée d'une charge inorganique, pour activer la fonction de couplage (charge inorganique/élastomère diénique) d'un alkoxysilane polysulfuré.

**52.** Système de couplage (charge inorganique/élastomère diénique) pour composition de caoutchouc à base d'élastomère diénique renforcée d'une charge inorganique, **caractérisé en ce qu'**il est constitué par l'association d'un alkoxysilane polysulfuré ("ASPS"), d'un dérivé guanidique et d'une aldimine (R-CH=N-R).

**53.** Système de couplage selon la revendication 52, l'ASPS étant un polysulfure de bis-alkoxyl($C_1$-$C_4$)silylalkyle ($C_1$-$C_{10}$).

**54.** Système de couplage selon les revendications 52 ou 53, dans lequel au moins un des radicaux R de l'aldimine est un groupement aryle.

**55.** Système de couplage selon l'une quelconque des revendications 52 à 54, l'aldimine étant choisie parmi les aldimines dérivées de l'aniline ou de la cyclohexylamine.

**56.** Système de couplage selon la revendication 55, l'aldimine étant choisie parmi les composés de formule (III-1) à (III-5):

(III-1)

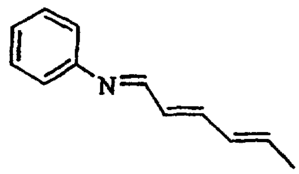

(III-2)

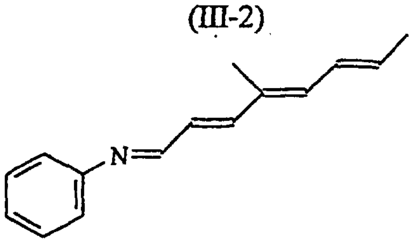

(III-3)

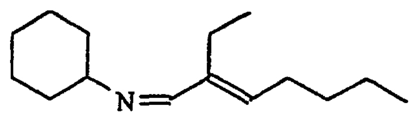

(III-4)

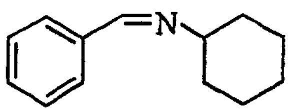

(III-5)

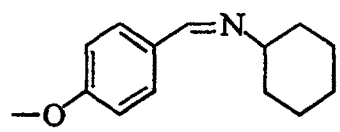

**57.** Système de couplage selon l'une quelconque des revendications 52 à 56, le dérivé guanidique étant la N,N'-diphénylguanidine (DPG).

**58.** Utilisation d'un système de couplage selon l'une quelconque des revendications 52 à 57, pour le couplage d'une charge inorganique renforçante et d'un élastomère diénique dans une composition de caoutchouc à base d'élastomère diénique renforcée d'une charge inorganique.

## Patentansprüche

**1.** Kautschukmischung, die für die Herstellung von Luftreifen verwendbar ist, auf der Basis von zumindest (i) einem Dienelastomer, (ii) einem anorganischen Füllstoff als verstärkenden Füllstoff, (iii) einem Alkoxysilanpolysulfid ("ASPS") als Kupplungsmittel (anorganischer Füllstoff/Dienelastomer), mit dem (iv) ein Aldimin (R-CH=N-R) und (v) ein Guanidinderivat kombiniert sind.

**2.** Zusammensetzung nach Anspruch 1, wobei das Dienelastomer unter den Polybutadienen, Polyisoprenen, Naturkautschuk, Butadien-Copolymeren, Isopren-Copolymeren und Gemischen dieser Elastomere ausgewählt ist.

3. Zusammensetzung nach Anspruch 1 oder 2, wobei der verstärkende anorganische Füllstoff ein Kieselsäure-haltiger oder Aluminiumoxid-haltiger Füllstoff und vorzugsweise eine hochdispergierbare Kieselsäure ist.

4. Zusammensetzung nach einem der Ansprüche 1 bis 3, wobei das ASPS ein Bis-alkoxy($C_{1-4}$)silylalkyl($C_{1-10}$)polysulfid ist.

5. Kautschukmischung nach einem der Ansprüche 1 bis 4, wobei mindestens eine der Gruppen R des Aldimin eine Arylgruppe bedeutet.

6. Kautschukmischung nach einem der Ansprüche 1 bis 5, wobei das Aldimin unter den von Anilin oder Cyclohexylamin abgeleiteten Aldiminen ausgewählt ist.

7. Kautschukmischung nach einem der Ansprüche 1 bis 6, wobei die Aldiminmenge im Bereich von 1 bis 20 Gew.-%, bezogen auf die ASPS-Menge, liegt.

8. Kautschukmischung nach einem der Ansprüche 1 bis 7, wobei die Gesamtmenge von ASPS und Aldimin weniger als 10 Gew.-%, bezogen auf den Mengenanteil des verstärkenden anorganischen Füllstoffs, ausmacht.

9. Kautschukmischung nach einem der Ansprüche 1 bis 8, wobei das Guanidinderivat das N,N'-Diphenylguanidin (DPG) ist.

10. Kautschukmischung nach einem der Ansprüche 1 bis 9, wobei der Mengenanteil des Guanidinderivats im Bereich von 0,5 bis 4 Gew.-%, bezogen auf den Mengenanteil des verstärkenden anorganischen Füllstoffs, liegt.

11. Kautschukmischung nach einem der Ansprüche 1 bis 10, wobei die Gesamtmenge von ASPS, Aldimin und Guanidinderivat 2 bis 20 Gew.-%, bezogen auf den Mengenanteil des verstärkenden anorganischen Füllstoffs, ausmacht.

12. Kautschukmischung nach einem der Ansprüche 2 bis 11, wobei das Dienelastomer ein Butadien/Styrol-Copolymer (SBR) mit einem Styrolgehalt im Bereich von 20 bis 30 Gew.-%, einem Anteil an Vinylbindungen des Butadienteils im Bereich von 15 bis 65 %, einen Gehalt an trans-1,4-Bindungen von 20 bis 75 % und einer Glasübergangstemperatur im Bereich von -20 bis - 55 °C ist.

13. Zusammensetzung nach Anspruch 12, wobei der SBR ein in Lösung hergestellter SBR ist.

14. Zusammensetzung nach den Ansprüchen 12 oder 13, wobei der SBR im Gemisch mit Polybutadien verwendet wird.

15. Zusammensetzung nach Anspruch 14, wobei das Polybutadien mehr als 90 % cis-1,4-Bindungen besitzt.

16. Zusammensetzung nach einem der Ansprüche 1 bis 15, wobei der verstärkende anorganische Füllstoff den gesamten verstärkenden Füllstoff bildet.

17. Zusammensetzungen nach einem der Ansprüche 1 bis 15, wobei der verstärkende anorganische Füllstoff im Gemisch mit Ruß verwendet wird.

18. Zusammensetzung nach einem der Ansprüche 4 bis 17, wobei das ASPS ein Bis-alkoxy($C_{1-4}$)silylpropylpolysulfid ist.

19. Zusammensetzung nach Anspruch 18, wobei das ASPS das 3-Triethoxysilylpropyldisulfid oder das 3-Triethoxysilylpropyltetrasulfid ist.

20. Kautschukmischung nach einem der Ansprüche 6 bis 19, wobei das Aldimin unter den Verbindungen der folgenden Formeln (III-1) bis (III-5) ausgewählt ist:

(III-1)

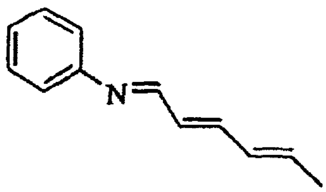

(III-2)

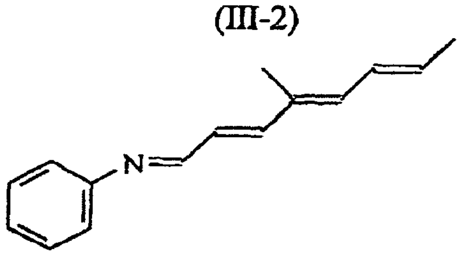

(III-3)

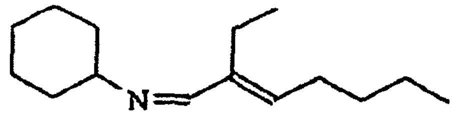

(III-4)

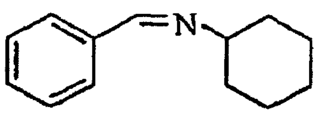

(III-5)

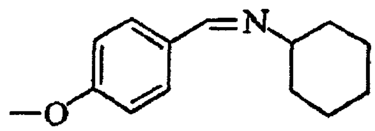

**21.** Kautschukmischung nach einem der Ansprüche 1 bis 20, **dadurch gekennzeichnet, dass** sie im vulkanisierten Zustand vorliegt.

**22.** Verfahren zur Herstellung einer mit Schwefel vulkanisierbaren und zur Herstellung von Luftreifen verwendbaren Kautschukmischung, **dadurch gekennzeichnet, dass** in (i) ein Dienelastomer (ii) ein anorganischer Füllstoff als verstärkender Füllstoff, (iii) ein Alkoxysilanpolysulfid ("ASPS"), (iv) ein Aldimin und (v) ein Guanidinderivat eingearbeitet werden, und dadurch, dass das Ganze in einem oder mehreren Schritten thermomechanisch geknetet wird, bis eine Maximaltemperatur von 120 bis 190 °C erreicht ist.

**23.** Verfahren nach Anspruch 22, wobei das Dienelastomer unter den Polybutadienen, Polyisoprenen, Naturkautschuk, Butadien-Copolymeren, Isopren-Copolymeren und Gemischen dieser Elastomere ausgewählt ist.

**24.** Verfahren nach den Ansprüchen 22 oder 23, wobei es sich bei dem verstärkenden anorganischen Füllstoff um einen Kieselsäure-haltigen oder Aluminiumoxid-haltigen Füllstoff und vorzugsweise eine hochdispergierbare Kieselsäure handelt.

**25.** Verfahren nach einem der Ansprüche 22 bis 24, wobei das ASPS ein Bis-alkoxy($C_{1-4}$)silylalkyl($C_{1-10}$)polysulfid ist.

**26.** Verfahren nach einem der Ansprüche 22 bis 25, wobei mindestens eine der Gruppen R des Aldimin eine Arylgruppe bedeutet.

**27.** Verfahren nach einem der Ansprüche 22 bis 26, wobei das Aldimin unter den von Anilin oder Cyclohexylamin abgeleiteten Aldiminen ausgewählt ist.

**28.** Verfahren nach einem der Ansprüche 22 bis 27, wobei die Aldiminmenge 1 bis 20 Gew.-%, bezogen auf den Mengenanteil des ASPS, ausmacht.

**29.** Verfahren nach einem der Ansprüche 22 bis 28, wobei die Gesamtmenge von ASPS und Aldimin weniger als 10 Gew.-%, bezogen auf den Mengenanteil des verstärkenden anorganischen Füllstoffs, ausmacht.

**30.** Verfahren nach einem der Ansprüche 22 bis 29, wobei das Guanidinderivat das N,N'-Diphenylguanidin (DPG) ist.

**31.** Verfahren nach einem der Ansprüche 22 bis 30, wobei der Mengenanteil des Guanidinderivats im Bereich von 0,5 bis 4 Gew.-%, bezogen auf die Menge des anorganischen verstärkenden Füllstoffs, liegt.

**32.** Verfahren nach einem der Ansprüche 22 bis 31, wobei die Gesamtmenge von ASPS, Aldimin und Guanidinderivat im Bereich von 2 bis 20 Gew.-%, bezogen auf den Mengenanteil des verstärkenden anorganischen Füllstoffs, liegt.

**33.** Verfahren nach einem der Ansprüche 25 bis 32, wobei das ASPS ein Bis-$C_{1-4}$-alkoxysilylpropylpolysulfid ist.

**34.** Verfahren nach einem der Ansprüche 27 bis 33, wobei das Aldimin unter den folgenden Verbindungen der Formeln (III-1) bis (III-5) ausgewählt ist:

(III-1)

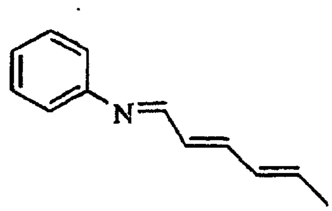

(III-2)

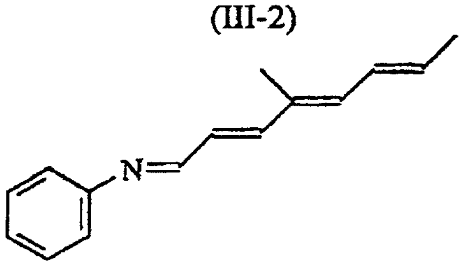

(III-3)

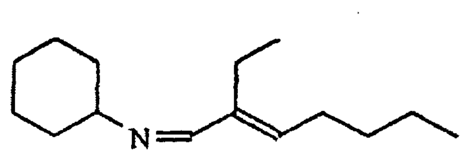

(III-4)

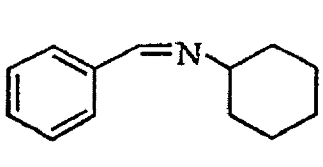

(III-5)

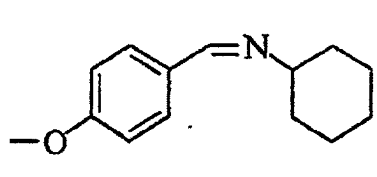

**35.** Verfahren nach einem der Ansprüche 22 bis 34, wobei die Maximaltemperatur beim Kneten im Bereich von 130 bis 180 °C liegt.

**36.** Verwendung einer Kautschukmischung nach einem der Ansprüche 1 bis 20 zur Herstellung von Luftreifen oder Halbfertigprodukten aus Kautschuk, die für Luftreifen vorgesehen sind, wobei diese Halbfertigprodukte insbesondere unter den Laufstreifen, Unterplatten, Scheitellagen, Seitenprofilen, Karkassenlagen, Reifenwülsten, Protektoren, Luftkammern oder Innenseelen für schlauchlose Reifen ausgewählt sind.

**37.** Luftreifen im unvulkanisierten Zustand, der eine Kautschukmischung nach einem der Ansprüche 1 bis 20 enthält.

**38.** Luftreifen im vulkanisierten Zustand, der eine Kautschukmischung nach Anspruch 21 enthält.

**39.** Halbfertigprodukt aus Kautschuk für Luftreifen, das eine Kautschukmischung nach einem der Ansprüche 1 bis 20 enthält, wobei dieses Halbfertigprodukt insbesondere unter den Laufstreifen, Unterplatten, Scheitellagen, Seitenprofilen, Karkassenlagen, Reifenwülsten, Protektoren, Luftkammern oder Innenseelen für schlauchlose Reifen ausgewählt ist.

**40.** Halbfertigprodukt nach Anspruch 39 in Form eines Laufstreifens für Luftreifen.

**41.** Laufstreifen für Luftreifen nach Anspruch 40, **dadurch gekennzeichnet, dass** er eine Kautschukmischung nach einem der Ansprüche 12 bis 15 enthält.

**42.** Verfahren zur Verknüpfung eines anorganischen Füllstoffs und eines Dienelastomers in einer Kautschukmischung, **dadurch gekennzeichnet, dass** in (i) ein Dienelastomer (ii): ein anorganischer Füllstoff als verstärkender Füllstoff; (iii) ein Alkoxysilanpolysulfid ("ASPS"); (iv) ein Aldimin (R-CH=N-R) und (v) ein Guanidinderivat eingebracht wird, und dadurch, dass das Ganze bis zum Erreichen einer Maximaltemperatur von 120 bis 190 °C in einem oder mehreren Schritten thermomechanisch geknetet wird.

**43.** Verfahren nach Anspruch 42, wobei das Dienelastomer unter den Polybutadienen, Polyisoprenen, Naturkautschuk, Butadien-Copolymeren, Isopren-Copolymeren und den Gemischen dieser Elastomere ausgewählt ist.

**44.** Verfahren nach den Ansprüchen 42 oder 43, wobei der verstärkende anorganische Füllstoff ein Kieselsäure-haltiger oder Aluminiumoxid-haltiger Füllstoff und vorzugsweise eine hochdispergierbare Kieselsäure ist.

**45.** Verfahren nach einem der Ansprüche 42 bis 44, wobei das ASPS ein Bis-alkoxy($C_{1-4}$)silylalkyl($C_{1-10}$)polysulfid ist.

**46.** Verfahren nach einem der Ansprüche 42 bis 45, wobei mindestens eine Gruppe R des Aldimins eine Arylgruppe ist.

**47.** Verfahren nach einem der Ansprüche 42 bis 46, wobei das Aldimin unter den von Anilin oder Cyclohexylamin abgeleiteten Aldiminen ausgewählt ist.

**48.** Verfahren nach Anspruch 47, wobei das Aldimin unter den Verbindungen der Formel (III-1) bis (III-5) ausgewählt ist:

(III-1)

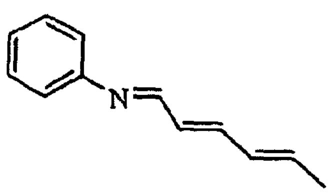

(III-2)

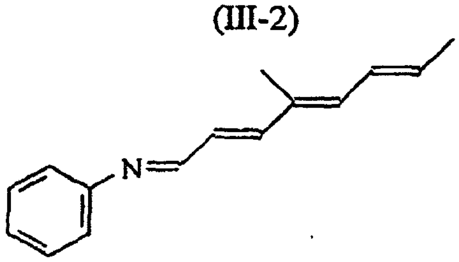

(III-3)

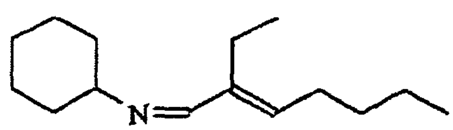

(III-4)

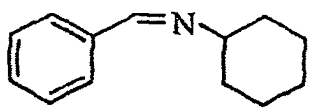

(III-5)

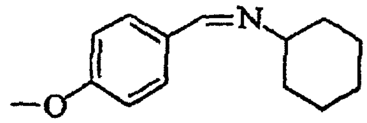

**49.** Verfahren nach einem der Ansprüche 42 bis 48, wobei das Guanidinderivat das N,N'-Diphenylguanidin (DPG) ist.

**50.** Verfahren nach einem der Ansprüche 42 bis 49, wobei die Maximaltemperatur beim Kneten im Bereich von 130 bis 180 °C liegt.

**51.** Verwendung eines Aldimins (R-CH=N-R) in Kombination mit einem Guanidinderivat in einer Kautschukmischung auf der Basis eines mit einem anorganischen Füllstoff verstärkten Dienelastomers zur Aktivierung der Kupplungsfunktion (anorganischer Füllstoff/Dienelastomer) eines Alkoxysilanpolysulfids.

**52.** Kupplungssystem (anorganischer Füllstoff/Dienelastomer) für eine Zusammensetzung auf der Basis eines mit einem anorganischen Füllstoff verstärkten Dienelastomers, **dadurch gekennzeichnet, dass** es aus der Kombination eines Alkoxysilanpolysulfids ("ASPS"), eines Guanidinderivats und eines Aldimins (R-CH=N-R) besteht.

**53.** Kupplungssystem nach Anspruch 52, wobei das ASPS ein Bisalkoxy($C_{1-4}$)silylalkyl($C_{1-10}$)polysulfid ist.

**54.** Kupplungssystem nach den Ansprüchen 52 bis 53, wobei mindestens eine Gruppe R des Aldimin eine Arylgruppe ist.

**55.** Kupplungssystem nach einem der Ansprüche 52 bis 54, wobei das Aldimin unter den von Anilin oder Cyclohexylamin abgeleiteten Aldiminen ausgewählt ist.

**56.** Kupplungssystem nach Anspruch 55, wobei das Aldimin unter den folgenden Verbindungen der Formel (III-1) bis (III-5) ausgewählt ist:

(III-1)

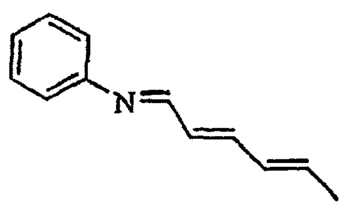

(III-2)

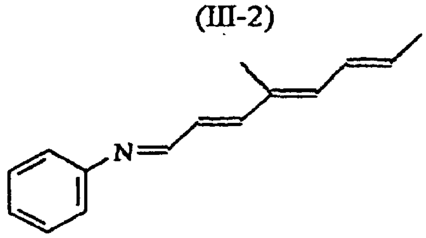

(III-3)

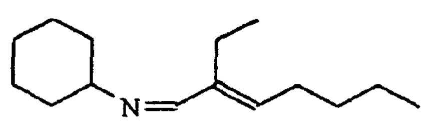

(III-4)

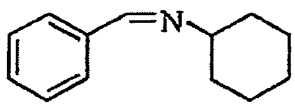

(III-5)

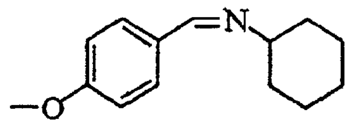

**57.** Kupplungssystem nach einem der Ansprüche 52 bis 56, wobei das Guanidinderivat das N,N'-Diphenylguanidin (DPG) ist.

**58.** Verwendung eines Kupplungssystems nach einem der Ansprüche 52 bis 57 für die Verknüpfung eines verstärkenden anionischen Füllstoffs und eines Dienelastomers in einer Kautschukmischung auf der Basis eines mit einem anorganischen Füllstoff verstärkten Dienelastomers.

**Claims**

**1.** A rubber composition usable for the manufacture of tyres, based on at least (i) a diene elastomer, (ii) an inorganic filler as reinforcing filler, (iii) a polysulphurised alkoxysilane ("PSAS") as (inorganic filler/diene elastomer) coupling agent , with which are associated (iv) an aldimine (R-CH=N-R) and (v) a guanidine derivative.

**2.** A composition according to Claim 1, the diene elastomer being selected from among the group consisting of polybutadienes, polyisoprenes, natural rubber, butadiene copolymers, isoprene copolymers and mixtures of these elastomers.

**3.** A composition according to Claims 1 or 2, the reinforcing inorganic filler being a siliceous or aluminous filler, preferably a highly dispersible silica.

**4.** A composition according to any one of Claims 1 to 3, the PSAS being a bis-($C_1C_4$)alkoxysilyl($C_1$-$C_{10}$)alkyl polysulphide.

**5.** A rubber composition according to any one of Claims 1 to 4, in which at least one of the radicals R of the aldimine is an aryl group.

**6.** A rubber composition according to any one of Claims 1 to 5, the aldimine being selected from among the aldimines derived from aniline or cyclohexylamine.

**7.** A rubber composition according to any one of Claims 1 to 6, in which the quantity of aldimine represents between 1% and 20% by weight relative to the quantity of PSAS.

**8.** A rubber composition according to any one of Claims 1 to 7, in which the total quantity of PSAS and of aldimine represents less than 10% by weight relative to the quantity of reinforcing inorganic filler.

**9.** A rubber composition according to any one of Claims 1 to 8, in which the guanidine derivative is N,N'-diphenylguanidine (DPG).

**10.** A rubber composition according to any one of Claims 1 to 9, in which the quantity of guanidine derivative represents between 0.5 and 4% by weight relative to the quantity of reinforcing inorganic filler.

**11.** A composition according to any one of Claims 1 to 10, in which the total quantity of PSAS, aldimine and guanidine derivative represents between 2% and 20% by weight relative to the quantity of reinforcing inorganic filler.

**12.** A composition according to any one of Claims 2 to 11, the diene elastomer being a butadiene-styrene copolymer (SBR) having a styrene content of between 20% and 30% by weight, a content of vinyl bonds of the butadiene part of between 15% and 65% by weight, a content of trans-1,4 bonds of between 20% and 75% and a glass

transition temperature of between -20°C and -55°C.

**13.** A composition according to Claim 12, the SBR being an SBR prepared in solution.

**14.** A composition according to Claims 12 or 13, the SBR being used in a mixture with a polybutadiene.

**15.** A composition according to Claim 14, the polybutadiene having more than 90% cis-1,4 bonds.

**16.** A composition according to any one of Claims 1 to 15, the reinforcing inorganic filler constituting the entire reinforcing filler.

**17.** A composition according to any one of Claims 1 to 15, the reinforcing inorganic filler being used in a mixture with carbon black.

**18.** A composition according to any one of Claims 4 to 17, the PSAS being a bis-($C_1$-$C_4$) alkoxy silylpropyl polysulphide.

**19.** A composition according to Claim 18, the PSAS being bis-3-triethoxysilylpropyl disulphide or tetrasulphide.

**20.** A rubber composition according to any one of Claims 6 to 19, the aldimine being selected from among the compounds of formula (III-1) to (III-5):

(III-1)

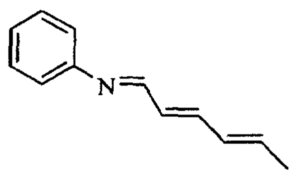

(III-2)

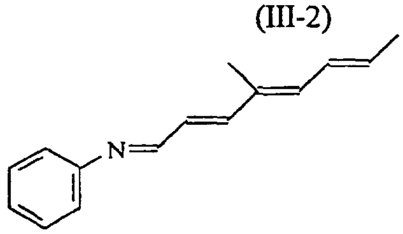

(III-3)

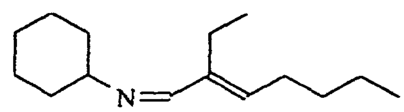

(III-4)

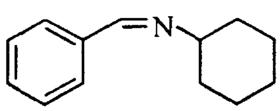

(III-5)

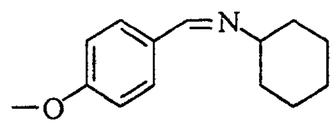

**21.** A rubber composition according to any one of Claims 1 to 20, **characterised in that** it is in the vulcanised state.

**22.** A process for preparing a sulphur-vulcanisable rubber composition usable for the manufacture of tyres, **characterised in that** there is incorporated in (i) at least a diene elastomer: (ii) an inorganic filler as reinforcing filler; (iii) a polysulphurised alkoxysilane ("PSAS"); (iv) an aldimine (R-CH=N-R) and (v) a guanidine derivative, and **in that** the entire mixture is kneaded thermomechanically, in one or more stages, until a maximum temperature of between 120°C and 190°C is reached.

**23.** A process according to Claim 22, the diene elastomer being selected from the group consisting of polybutadienes, polyisoprenes, natural rubber, butadiene copolymers, isoprene copolymers and mixtures of these elastomers.

**24.** A process according to Claims 22 or 23, the reinforcing inorganic filler being a siliceous or aluminous filler, preferably a highly dispersible silica.

**25.** A process according to any one of Claims 22 to 24, the PSAS being a bis- ($C_1$-$C_4$)alkoxysilyl($C_1$-$C_{10}$)alkyl polysulphide.

**26.** A process according to any one of Claims 22 to 25, in which at least one of the radicals R of the aldimine is an aryl group.

**27.** A process according to any one of Claims 22 to 26, the aldimine being selected from among the aldimines derived from aniline or cyclohexylamine.

**28.** A process according to any one of Claims 22 to 27, the quantity of aldimine representing between 1% and 20% by weight relative to the quantity of PSAS.

**29.** A process according to any one of Claims 22 to 28, the total quantity of PSAS and of aldimine representing less than 10% by weight relative to the quantity of reinforcing inorganic filler.

**30.** A process according to any one of Claims 22 to 29, the guanidine derivative being N,N'-diphenylguanidine (DPG).

**31.** A process according to any one of Claims 22 to 30, the quantity of guanidine derivative representing between 0.5 and 4% by weight relative to the quantity of reinforcing inorganic filler.

**32.** A process according to any one of Claims 22 to 31, the total quantity of PSAS, aldimine and guanidine derivative representing between 2% and 20% by weight relative to the quantity of reinforcing inorganic filler.

**33.** A process according to any one of Claims 25 to 32, the PSAS being a bis-($C_1$-$C_4$) alkoxysilylpropyl polysulphide.

**34.** A process according to any one of Claims 27 to 33, the aldimine being selected from among the compounds of formula (III-1) to (III-5):

(III-1)

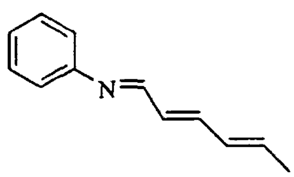

(III-2)

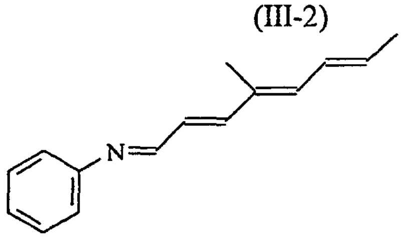

(III-3)

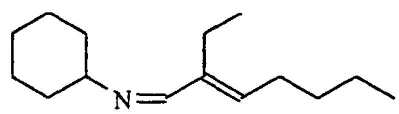

(III-4)

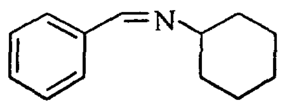

(III-5)

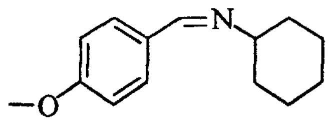

**35.** A process according to any one of Claims 24 to 34, the maximum kneading temperature being between 130°C and 180°C.

**36.** The use of a rubber composition according to any one of Claims 1 to 20 for the manufacture of tyres or semi-finished rubber products intended for tyres, these semi-finished products being selected in particular from the group comprising treads, underlayers, crown plies, sidewalls, carcass plies, beads, protectors, inner tubes and airtight internal rubbers for tubeless tyres.

**37.** A tyre in the uncured state comprising a rubber composition according to any one of Claims 1 to 20.

**38.** A tyre in the vulcanised state comprising a rubber composition according to Claim 21.

**39.** A semi-finished rubber product for tyres, comprising a rubber composition according to any one of Claims 1 to 20, this semi-finished product being selected in particular from among the group comprising treads, underlayers, crown plies, sidewalls, carcass plies, beads, protectors, inner tubes and airtight internal rubbers for tubeless tyres.

**40.** A semi-finished product according to Claim 39, in the form of a tyre tread.

**41.** A tyre tread according to Claim 40, **characterised in that** it comprises a rubber composition according to any one of Claims 12 to 15.

**42.** A process for coupling an inorganic filler and a diene elastomer, in a rubber composition, **characterised in that** there are incorporated in (i) a diene elastomer: (ii) an inorganic filler as reinforcing filler; (iii) a polysulphurised alkoxysilane ("PSAS"); (iv) an aldimine (R-CH=N-R) and (v) a guanidine derivative, and **in that** the entire mixture is kneaded thermomechanically, in one or more stages, until a maximum temperature of between 120°C and 190°C is reached.

**43.** A process according to Claim 42, the diene elastomer being selected from the group consisting of polybutadienes, polyisoprenes, natural rubber, butadiene copolymers, isoprene copolymers and mixtures of these elastomers.

**44.** A process according to Claims 42 or 43, the reinforcing inorganic filler being a siliceous or aluminous filler, preferably a highly dispersible silica.

**45.** A process according to any one of Claims 42 to 44, the PSAS being a bis-($C_1$-$C_4$)alkoxysilyl($C_1$-$C_{10}$)alkyl polysulphide.

**46.** A process according to any one of Claims 42 to 45, in which at least one of the radicals R of the aldimine is an aryl group.

**47.** A process according to any one of Claims 42 to 46, the aldimine being selected from among the aldimines derived from aniline or cyclohexylamine.

**48.** A process according to Claim 47, the aldimine being selected from among the compounds of formula (III-1) to (III-5):

(III-1)

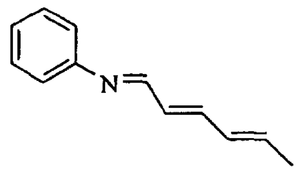

(III-2)

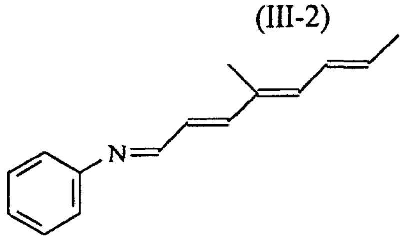

(III-3)

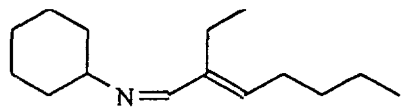

(III-4)

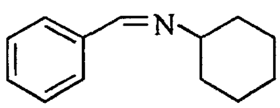

(III-5)

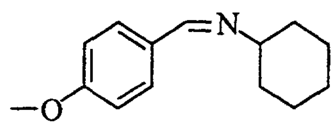

**49.** A process according to any one of Claims 42 to 48, the guanidine derivative being N,N'-diphenylguanidine (DPG).

**50.** A process according to any one of Claims 42 to 49, the maximum kneading temperature being between 130°C and 180°C.

**51.** The use in combination of an aldimine (R-CH=N-R) and a guanidine derivative in a rubber composition based on diene elastomer reinforced with an inorganic filler, in order to activate the coupling function (inorganic filler/diene elastomer) of a polysulphurised alkoxysilane.

**52.** A coupling system (inorganic filler/diene elastomer) for a rubber composition based on diene elastomer reinforced by a inorganic filler, **characterised in that** it is formed by the association of a polysulphurised alkoxysilane ("PSAS"), a guanidine derivative and an aldimine (R-CH=N-R).

**53.** A coupling system according to Claim 52, the PSAS being a bis-($C_1$-$C_4$)alkoxysilyl($C_1$-$C_{10}$)alkyl polysulphide.

**54.** A coupling system according to Claims 52 or 53, in which at least one of the radicals R of the aldimine is an aryl group.

**55.** A coupling system according to any one of Claims 52 to 54, the aldimine being selected from among the aldimines derived from aniline or cyclohexylamine.

**56.** A coupling system according to Claim 55, the aldimine being selected from among the compounds of formula (III-1) to (III-5):

(III-1)

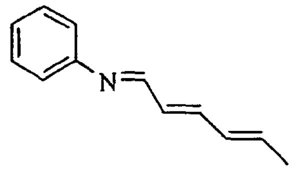

(III-2)

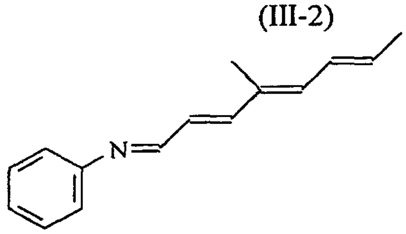

(III-3)

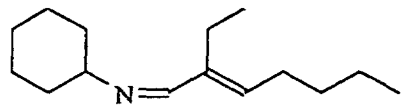

(III-4)

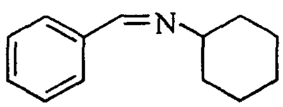

(III-5)

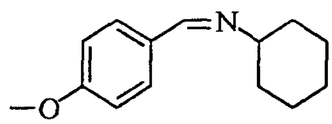

**57.** A coupling system according to any one of Claims 52 to 56, the guanidine derivative being N,N'-diphenylguanidine (DPG).

**58.** The use of a coupling system according to any one of Claims 52 to 57 for coupling a reinforcing inorganic filler and a diene elastomer in a rubber composition based on diene elastomer reinforced with an inorganic filler.

**Figure 1**

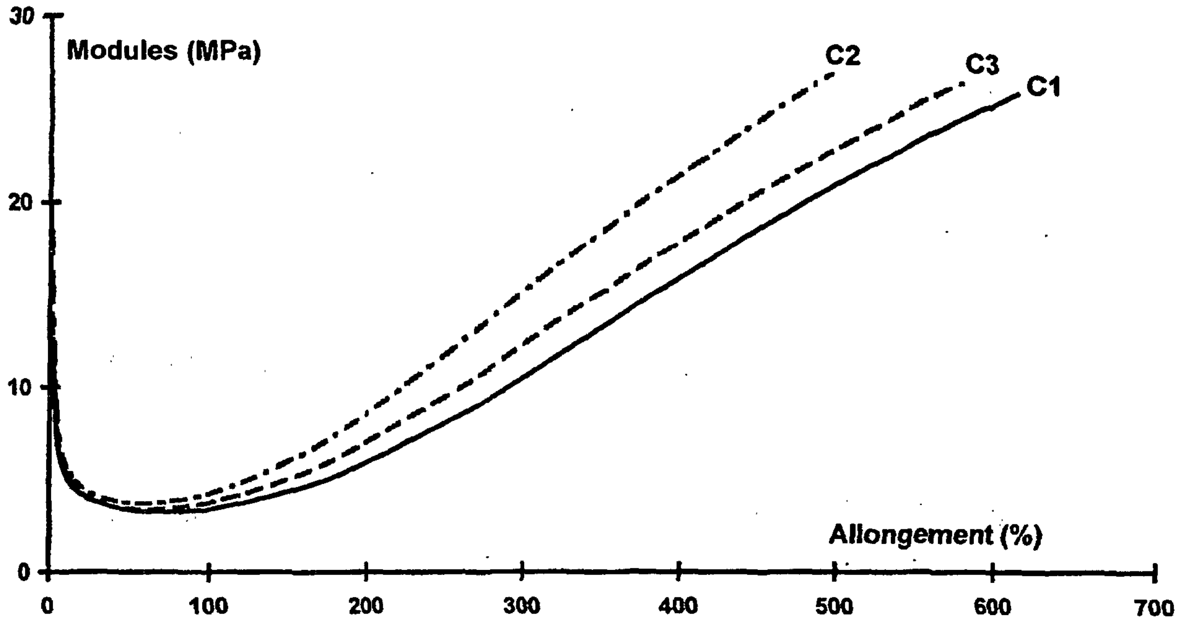


**Figure 2**

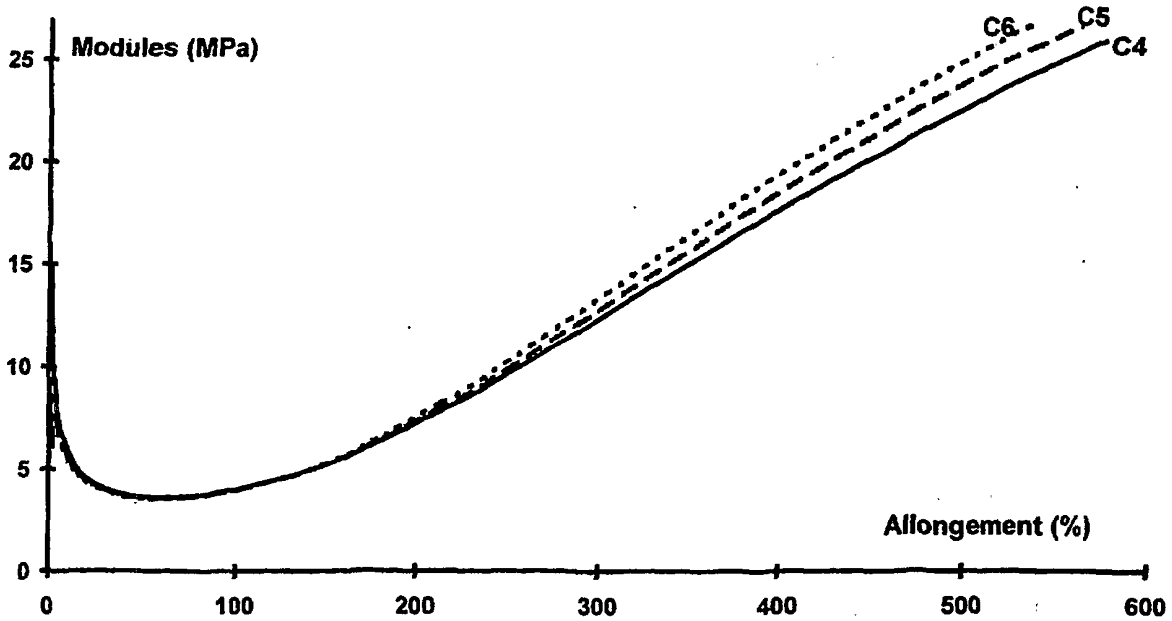

## Figure 3

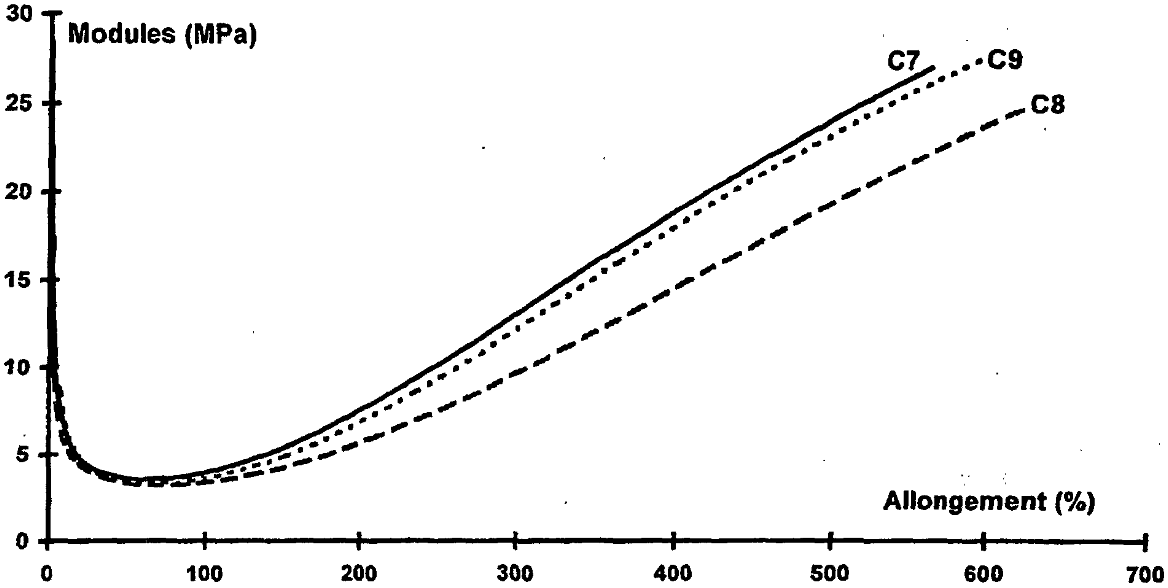


## Figure 4

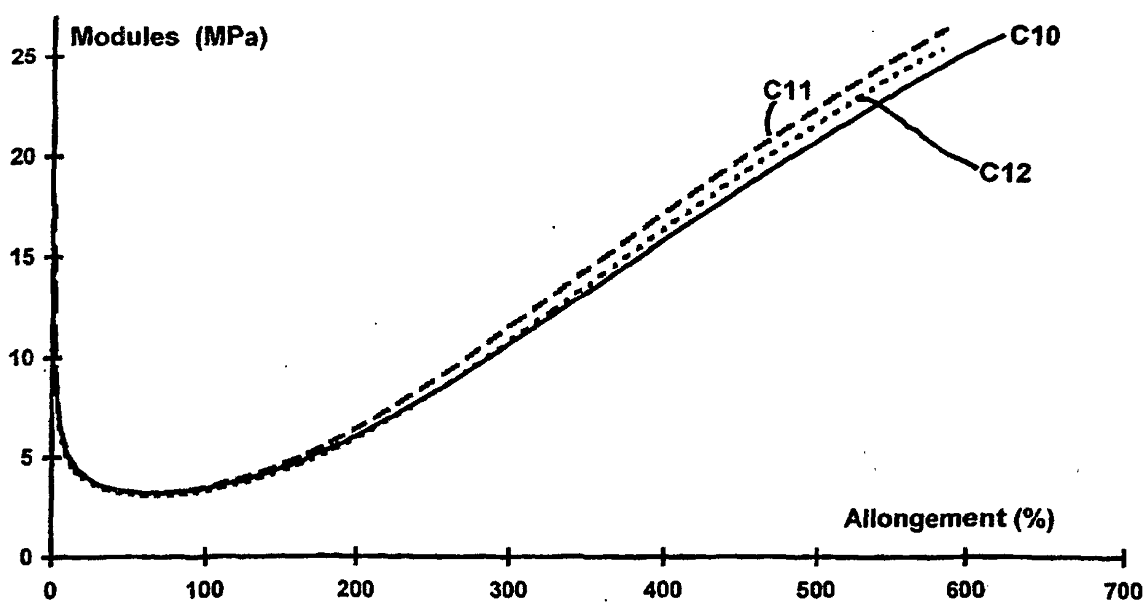

**Figure 5**

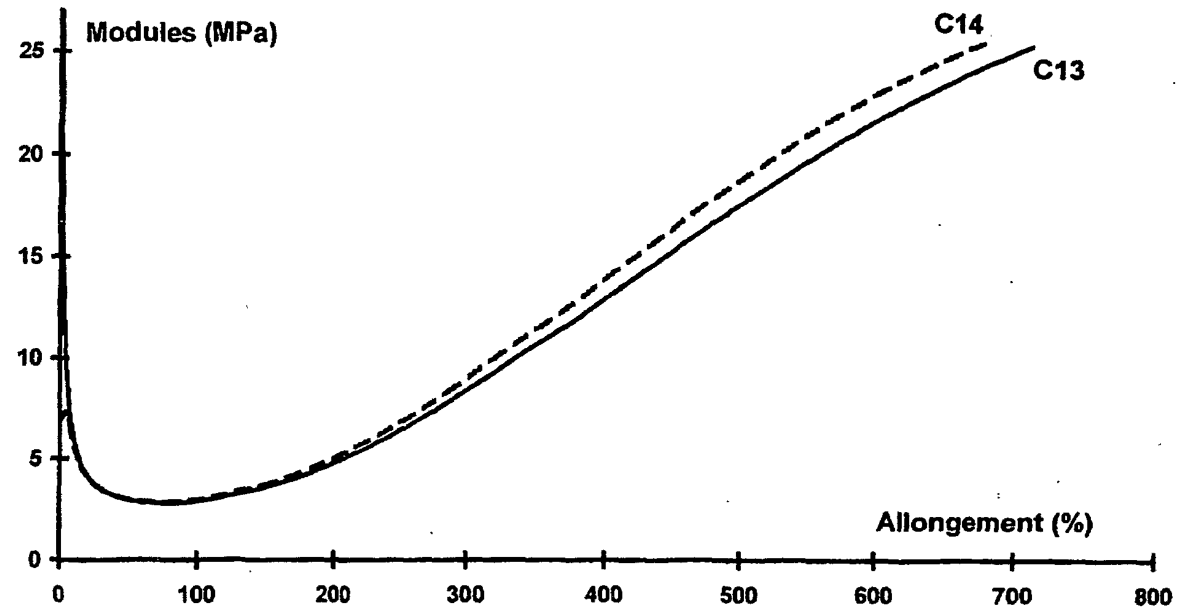


**Figure 6**